# EUROPEAN PATENT APPLICATION

(11) **EP 4 693 957 A1**
(43) Date of publication of application: **11.02.2026**
(21) Application number: 23935137.2
(22) Date of filing: 14.12.2023
(51) Int. Cl.: H04B 11/00

(54) **ULTRASONIC WAVE-BASED DEVICE CONNECTING METHOD AND RELATED APPARATUS**

(30) Priority: 25.04.2023 CN 202310475028; 07.06.2023 CN 202310672093
(71) Applicant: Huawei Technologies Co., Ltd., Shenzhen, Guangdong 518129 (CN)
(72) Inventor: MIAO, Yun, Shenzhen, Guangdong 518129 (CN); TANG, Ruying, Shenzhen, Guangdong 518129 (CN); MA, Dingjiong, Shenzhen, Guangdong 518129 (CN); JIANG, Tianpeng, Shenzhen, Guangdong 518129 (CN); LIU, Zhihui, Shenzhen, Guangdong 518129 (CN); ZHANG, Lei, Shenzhen, Guangdong 518129 (CN); SUN, Jie, Shenzhen, Guangdong 518129 (CN)
(74) Representative: Gill Jennings & Every LLP
(86) International application number: PCT/CN2023/138772
(87) International publication number: WO 2024/221971

(57) **Abstract**

An ultrasonic wave-based device connection method is applied to device connection in a conference scenario or a screen projection scenario. In the method, a first electronic device sends a plurality of ultrasonic signals that respectively carry detection information and that are in different bands, and obtains decoded information that is obtained by decoding each ultrasonic signal and that is fed back by a second electronic device. Detection information corresponding to each of the plurality of ultrasonic signals is compared with the decoded information, to determine a target band in which the second electronic device can correctly decode an ultrasonic wave, and then connection information is sent by using an ultrasonic wave in the target band, so that the second electronic device establishes a connection to the first electronic device based on the connection information. This effectively ensures that all devices having different frequency responses can establish a connection between devices based on an ultrasonic signal.

## Description

This application claims priorities to Chinese Patent Application No. 202310475028.X, filed with the China National Intellectual Property Administration on April 25, 2023 and entitled "DEVICE PAIRING METHOD", and to Chinese Patent Application No. CN202310672093.1, filed with the China National Intellectual Property Administration on June 7, 2023 and entitled "ULTRASONIC WAVE-BASED DEVICE CONNECTION METHOD AND RELATED APPARATUS", both of which are incorporated herein by reference in their entireties.

### TECHNICAL FIELD

This application relates to the field of computer technologies, and in particular, to an ultrasonic wave-based device connection method and a related apparatus.

### BACKGROUND

An ultrasonic wave is a sound wave whose frequency is higher than an average hearing upper limit of people, and is essentially a mechanical wave with a very short wavelength. In daily life, the ultrasonic wave has a large quantity of application scenarios, such as distance measurement, object detection, and data transmission. Specifically, an ultrasonic sensor may detect, by measuring a change of an echo of a sound wave, whether an object exists. In data transmission, the ultrasonic wave can be used as a carrier to transmit information wirelessly at a short distance, and therefore can be applied to a wireless payment system, a mobile message, and a location-based service. In general, the ultrasonic wave is widely used in modern communication systems and has become an important tool of modern communication technologies.

In a conventional conference scenario, a user usually manually enters a conference number on a terminal device to connect to a conference tablet in a conference room, so that the terminal device can join a conference held on the conference tablet. In a related technology, based on incapability of the ultrasonic wave to penetrate walls, the conference tablet transmits the conference number by using the ultrasonic wave, so that a terminal device outside the conference room cannot obtain the conference number and therefore cannot establish a connection to the conference tablet. This ensures conference security.

However, in a related technology for establishing a connection between a conference tablet and a terminal device based on an ultrasonic wave, there is usually a problem that the connection between the terminal device and the conference tablet fails to be established.

### SUMMARY

This application provides an ultrasonic wave-based device connection method, to ensure that a connection can be normally established between devices.

A first aspect of this application provides an ultrasonic wave-based device connection method, applied to a first electronic device used as an ultrasonic signal transmitter. The method includes: When a connection to a second electronic device needs to be established, the first electronic device sends a detection signal, where the detection signal includes a plurality of ultrasonic signals, each of the plurality of ultrasonic signals is in a different band, that is, the plurality of ultrasonic signals are in a one-to-one correspondence with a plurality of different bands, and each ultrasonic signal further carries corresponding detection information. A manner of using the ultrasonic signal to carry the detection information may be: first determining detection information corresponding to each band, and then modulating the detection information onto an ultrasonic signal in the corresponding band, so that the corresponding detection information is carried in the ultrasonic signal in each band.

Then, the first electronic device receives a feedback message sent by the second electronic device, and determines a target band from the plurality of different bands. The feedback message indicates decoded information obtained by the second electronic device by decoding the ultrasonic signal in each band. That is, the feedback message indicates decoded information obtained by the second electronic device by decoding each ultrasonic signal in the detection signal. Detection information corresponding to the target band is the same as decoded information corresponding to the target band. That is, the second electronic device can correctly decode an ultrasonic signal in the target band.

Finally, the first electronic device sends a target ultrasonic signal, where a band corresponding to the target ultrasonic signal includes the target band. The target ultrasonic signal carries connection information, and the connection information is used to establish a connection between the second electronic device and the first electronic device. The connection information includes, for example, a projection code, a pairing key, a conference number, or an internet protocol (Internet Protocol, IP) address of the first electronic device.

In this solution, the first electronic device sends the plurality of ultrasonic signals that respectively carry detection information and that are in the different bands, and obtains the decoded information that is obtained by decoding each ultrasonic signal and that is fed back by the second electronic device. The detection information corresponding to each of the plurality of ultrasonic signals is compared with the decoded information, to determine the target band in which the second electronic device can correctly decode an ultrasonic wave, and then the connection information is sent by using an ultrasonic wave in the target band, so that the second electronic device establishes a connection to the first electronic device based on the connection information. This effectively ensures that all devices having different frequency responses can establish a connection between devices based on an ultrasonic signal.

In a possible implementation, the detection signal is obtained by superimposing the plurality of ultrasonic signals in the different bands. That is, the detection signal carries the plurality of ultrasonic signals in the different bands in a same time period.

In this solution, the plurality of ultrasonic signals in the different bands are superimposed to obtain the detection signal, so that transmission of the plurality of ultrasonic signals can be implemented simultaneously, thereby improving transmission efficiency of the detection information, and shortening time required for determining the target band in which the second electronic device can correctly decode an ultrasonic signal.

In a possible implementation, the target band includes a plurality of subbands, and each subband in the target band is a band in which the second electronic device can correctly decode an ultrasonic signal. The target ultrasonic signal is obtained by superimposing a plurality of ultrasonic signals in different subbands, and an ultrasonic signal in each subband carries a part of content of the connection information.

In this solution, the ultrasonic signals in the plurality of subbands are superimposed to obtain the target ultrasonic signal, and the ultrasonic signal in each subband carries a part of content of the connection information, so that a transmission rate of the connection information can be multiplied, and transmission time of the connection information can be effectively shortened.

In a possible implementation, before the first electronic device sends the detection signal, the first electronic device may further receive a broadcast message and trigger sending of the detection signal based on the received broadcast message, where the broadcast message indicates the first electronic device to send an ultrasonic signal. That is, the first electronic device triggers the detection signal only when receiving the broadcast message, instead of continuously sending the detection signal.

In this solution, the second electronic device sends the broadcast message to trigger the first electronic device to send the detection signal, so that the first electronic device can be prevented from continuously sending the detection signal. This effectively avoids interference to a human ear caused by sending an ultrasonic signal for a long time by the first electronic device, and reduces energy consumption of the first electronic device.

In a possible implementation, the broadcast message further includes device information of the second electronic device. After determining the target band corresponding to the second electronic device, the first electronic device stores a mapping relationship between the device information of the second electronic device and the target band. In this way, when the second electronic device expects to access the first electronic device next time, the first electronic device can determine, based on the stored mapping relationship, the target band in which the second electronic device can correctly decode an ultrasonic signal, so as to directly send connection information by using an ultrasonic signal in the target band, thereby omitting a process of sending a detection signal to determine a band.

In this solution, the second electronic device sends the device information in the broadcast message, and the first electronic device records the mapping relationship between the device information of the second electronic device and the target band in which the second electronic device can correctly decode an ultrasonic signal, so that the first electronic device can quickly send an ultrasonic signal in the target band when the second electronic device accesses the first electronic device again, and the band in which the second electronic device can correctly decode an ultrasonic signal does not need to be detected, thereby improving efficiency of establishing a connection between the first electronic device and the second electronic device.

In a possible implementation, after obtaining the mapping relationship between the device information of the second electronic device and the target band, the first electronic device sends the mapping relationship to a server. In this way, the server may synchronize the mapping relationship to another electronic device, so that when the second electronic device establishes a connection to the another electronic device, the another electronic device can also quickly determine the band in which the second electronic device can correctly decode an ultrasonic signal.

In this solution, the mapping relationship between the device information of the second electronic device and the target band is sent by the first electronic device to the server, so that the band in which the second electronic device can correctly decode an ultrasonic signal can be synchronized between a plurality of devices, thereby improving efficiency of establishing a connection between the second electronic device and each electronic device.

In a possible implementation, before sending the detection signal, the first electronic device obtains reverberation time of an environment in which the first electronic device is located, and determines, based on the reverberation time, duration of a waveform that is in the detection signal and that represents each character in the detection information. Longer reverberation time of the environment in which the first electronic device is located indicates longer duration of a waveform that is in the target ultrasonic signal and that represents each character; and shorter reverberation time of the environment in which the first electronic device is located indicates shorter duration of a waveform that is in the target ultrasonic signal and that represents each character.

In this solution, the duration of the waveform that is in the ultrasonic signal and that represents each character is determined based on the reverberation time of the environment in which the first electronic device is located, so that the duration of the wavelength can be prolonged accordingly in the environment with the reverberation time, thereby reducing reverberation interference in the environment, and ensuring that the second electronic device can normally decode the ultrasonic signal.

In a possible implementation, when all detection information in the detection signal is different from the decoded information sent by the second electronic device, it indicates that the second electronic device cannot correctly decode the ultrasonic signals in the plurality of bands corresponding to the detection signal, and the first electronic device sequentially sends ultrasonic signals that carry detection information and whose bands gradually change, and receives decoded information sent by the second electronic device for the ultrasonic signals whose bands gradually change, until the decoded information sent by the second electronic device is the same as detection information in a corresponding ultrasonic signal.

In this solution, the band of the ultrasonic signal sent by the first electronic device is gradually adjusted, so that a band in which the second electronic device can correctly decode an ultrasonic signal can be comprehensively searched for, to ensure that the second electronic device can correctly obtain the connection information through decoding.

In a possible implementation, the connection established between the second electronic device and the first electronic device is used to implement screen projection or conference joining, and the connection established between the second electronic device and the first electronic device is, for example, a Wi-Fi connection.

In a possible implementation, to ensure that no mutual crosstalk occurs between a plurality of ultrasonic signals in different bands, bands corresponding to different ultrasonic signals in the plurality of ultrasonic signals sent by the first electronic device do not overlap. That is, the bands corresponding to the different ultrasonic signals are independent of each other and have no overlapping range.

A second aspect of this application provides an ultrasonic wave-based device connection method, applied to a second electronic device used as an ultrasonic signal receiver. The method includes: The second electronic device receives a detection signal sent by a first electronic device, where the detection signal includes a plurality of ultrasonic signals, the plurality of ultrasonic signals are in a one-to-one correspondence with a plurality of different bands, and each of the plurality of ultrasonic signals carries corresponding detection information; the second electronic device sends a feedback message to the first electronic device, where the feedback message indicates decoded information obtained by the second electronic device by decoding each ultrasonic signal; the second electronic device receives a target ultrasonic signal sent by the first electronic device, where a band corresponding to the target ultrasonic signal includes a target band, the target band is determined from the plurality of different bands, detection information corresponding to the target band is the same as decoded information corresponding to the target band, and the target ultrasonic signal carries connection information; and the second electronic device establishes a connection to the first electronic device based on the connection information.

In a possible implementation, the detection signal is obtained by superimposing the plurality of ultrasonic signals in the different bands.

In a possible implementation, the target band includes a plurality of subbands, the target ultrasonic signal is obtained by superimposing a plurality of ultrasonic signals in different subbands, and an ultrasonic signal in each subband carries a part of content of the connection information. After receiving the target ultrasonic signal, the second electronic device combines decoded information obtained by decoding the ultrasonic signal in each subband, to obtain the connection information.

In a possible implementation, before the second electronic device receives the detection signal sent by the first electronic device, the second electronic device obtains a first instruction, where the first instruction indicates the second electronic device to establish a connection to the first electronic device; and in response to the first instruction, the second electronic device sends a broadcast message, where the broadcast message indicates the first electronic device to send an ultrasonic signal.

In a possible implementation, the broadcast message includes device information of the second electronic device.

In a possible implementation, duration of a waveform that is in the detection signal and that represents each character in the detection information is related to reverberation time of an environment in which the first electronic device is located.

In a possible implementation, when all detection information in the detection signal is different from the decoded information sent by the second electronic device, the second electronic device sequentially receives ultrasonic signals sent by the first electronic device that carry detection information and whose bands gradually change, and sequentially sends, to the first electronic device, decoded information for the ultrasonic signals whose bands gradually change, until the decoded information sent by the second electronic device is the same as detection information in a corresponding ultrasonic signal.

In a possible implementation, the connection established between the second electronic device and the first electronic device is used to implement screen projection or conference joining.

In a possible implementation, bands corresponding to different ultrasonic signals in the plurality of ultrasonic signals do not overlap.

In a possible implementation, the connection information includes a projection code, a conference number, or an IP address of the first electronic device.

A third aspect of this application provides an ultrasonic wave-based device connection apparatus. The apparatus is deployed on a first electronic device, and the apparatus includes: a sending module, configured to send a detection signal, where the detection signal includes a plurality of ultrasonic signals, the plurality of ultrasonic signals are in a one-to-one correspondence with a plurality of different bands, and each of the plurality of ultrasonic signals carries corresponding detection information; a receiving module, configured to receive a feedback message sent by a second electronic device, where the feedback message indicates decoded information obtained by the second electronic device by decoding each ultrasonic signal; and a processing module, configured to determine a target band from the plurality of different bands, where detection information corresponding to the target band is the same as decoded information corresponding to the target band. The sending module is further configured to send a target ultrasonic signal, where a band corresponding to the target ultrasonic signal includes the target band, the detection information corresponding to the target band is the same as the decoded information corresponding to the target band, the target ultrasonic signal carries connection information, and the connection information is used to establish a connection between the second electronic device and the first electronic device.

In a possible implementation, the detection signal is obtained by superimposing the plurality of ultrasonic signals in the different bands.

In a possible implementation, the target band includes a plurality of subbands, the target ultrasonic signal is obtained by superimposing a plurality of ultrasonic signals in different subbands, and an ultrasonic signal in each subband carries a part of content of the connection information.

In a possible implementation, before the sending module sends the detection signal, the receiving module is further configured to receive a broadcast message, where the broadcast message indicates the first electronic device to send an ultrasonic signal.

In a possible implementation, the broadcast message includes device information of the second electronic device; and the apparatus further includes the processing module, configured to store a mapping relationship between the device information of the second electronic device and the target band.

In a possible implementation, the sending module is further configured to send the mapping relationship to a server.

In a possible implementation, the apparatus further includes the processing module, configured to obtain reverberation time of an environment in which the apparatus is located, and determine, based on the reverberation time, duration of a waveform that is in the detection signal and that represents each character in the detection information.

In a possible implementation, when all detection information in the detection signal is different from the decoded information sent by the second electronic device, the sending module is further configured to sequentially send ultrasonic signals that carry detection information and whose bands gradually change, and the receiving module is further configured to receive decoded information sent by the second electronic device for the ultrasonic signals whose bands gradually change, until the decoded information sent by the second electronic device is the same as detection information in a corresponding ultrasonic signal.

In a possible implementation, the connection established between the second electronic device and the first electronic device is used to implement screen projection or conference joining.

In a possible implementation, bands corresponding to different ultrasonic signals in the plurality of ultrasonic signals do not overlap.

In a possible implementation, the connection information includes a projection code, a pairing key, a conference number, or an IP address of the first electronic device.

A fourth aspect of this application provides an ultrasonic wave-based device connection apparatus. The apparatus is deployed on a second electronic device, and the apparatus includes: a receiving module, configured to receive a detection signal sent by a first electronic device, where the detection signal includes a plurality of ultrasonic signals, the plurality of ultrasonic signals are in a one-to-one correspondence with a plurality of different bands, and each of the plurality of ultrasonic signals carries corresponding detection information; and a sending module, configured to send a feedback message to the first electronic device, where the feedback message indicates decoded information obtained by the second electronic device by decoding each ultrasonic signal. The receiving module is further configured to receive a target ultrasonic signal sent by the first electronic device, where a target band is determined from the plurality of different bands, a band corresponding to the target ultrasonic signal includes the target band, detection information corresponding to the target band is the same as decoded information corresponding to the target band, and the target ultrasonic signal carries connection information. The sending module is further configured to enable, based on the connection information, the second electronic device to establish a connection to the first electronic device.

In a possible implementation, the detection signal is obtained by superimposing the plurality of ultrasonic signals in the different bands.

In a possible implementation, the target band includes a plurality of subbands, the target ultrasonic signal is obtained by superimposing a plurality of ultrasonic signals in different subbands, and an ultrasonic signal in each subband carries a part of content of the connection information. The apparatus further includes a processing module, configured to combine decoded information obtained by decoding the ultrasonic signal in each subband, to obtain the connection information.

In a possible implementation, the apparatus further includes an obtaining module; before the receiving module receives the detection signal sent by the first electronic device, the obtaining module is further configured to obtain a first instruction, where the first instruction indicates the second electronic device to establish a connection to the first electronic device; and the sending module is further configured to send a broadcast message in response to the first instruction, where the broadcast message indicates the first electronic device to send an ultrasonic signal.

In a possible implementation, the broadcast message includes device information of the second electronic device.

In a possible implementation, duration of a waveform that is in the detection signal and that represents each character in the detection information is related to reverberation time of an environment in which the first electronic device is located.

In a possible implementation, when all detection information in the detection signal is different from the decoded information sent by the second electronic device, the receiving module is further configured to sequentially receive ultrasonic signals sent by the first electronic device that carry detection information and whose bands gradually change, and the sending module is further configured to sequentially send, to the first electronic device, decoded information for the ultrasonic signals whose bands gradually change, until the decoded information sent by the second electronic device is the same as detection information in a corresponding ultrasonic signal.

In a possible implementation, the connection established between the second electronic device and the first electronic device is used to implement screen projection or conference joining.

In a possible implementation, bands corresponding to different ultrasonic signals in the plurality of ultrasonic signals do not overlap.

In a possible implementation, the connection information includes a projection code, a pairing key, a conference number, or an IP address of the first electronic device.

A fifth aspect of this application provides an electronic device, including a processor and a memory. The memory is configured to store computer instructions, and when the processor executes the instructions, the electronic device is enabled to perform the method according to any one of the foregoing aspects. The electronic device may include the apparatus in the third aspect or the fourth aspect.

A sixth aspect of this application provides a conference system, including the apparatus according to any implementation of the third aspect and the apparatus according to any implementation of the fourth aspect.

A seventh aspect of this application provides a computer-readable storage medium. The computer-readable storage medium stores instructions. When the instructions are run on an electronic device, the electronic device is enabled to perform the method according to any one of the foregoing aspects.

An eighth aspect of this application provides a computer program product including instructions. When the instructions are run on an electronic device, the electronic device is enabled to perform the method according to any one of the foregoing aspects.

A ninth aspect of this application provides a chip. The chip includes a processor and a communication interface. The communication interface is configured to communicate with a module other than the chip. The processor is configured to run a computer program or instructions, so that an apparatus in which the chip is installed can perform the method according to any one of the foregoing aspects.

For technical effects brought by any one of the designs of the second aspect to the ninth aspect, refer to the technical effects brought by different implementations of the first aspect. Details are not described herein again.

### BRIEF DESCRIPTION OF DRAWINGS

FIG. 1 is a diagram of an architecture of an application scenario according to an embodiment of this application;
FIG. 2 is a diagram of an architecture of an application scenario according to an embodiment of this application;
FIG. 3 is a diagram of a structure of an electronic device 300 according to an embodiment of this application;
FIG. 4 is a diagram of a structure of an electronic device 401 according to an embodiment of this application;
FIG. 5 is a schematic flowchart of an ultrasonic wave-based device connection method according to an embodiment of this application;
FIG. 6A is a diagram of a detection signal according to an embodiment of this application;
FIG. 6B is a diagram of another detection signal according to an embodiment of this application;
FIG. 7A is a diagram of delivering an instruction to a first electronic device to trigger the first electronic device to send a detection signal according to an embodiment of this application;
FIG. 7B is a diagram in which a second electronic device sends a broadcast message to trigger a first electronic device to send a detection signal according to an embodiment of this application;
FIG. 8 is a diagram of an interaction process between a second electronic device and a first electronic device according to an embodiment of this application;
FIG. 9 is a schematic flowchart of interaction between a notebook computer and a conference tablet according to an embodiment of this application;
FIG. 10 is a diagram of a waveform of an ultrasonic signal that carries connection information according to an embodiment of this application;
FIG. 11 is a diagram of an ultrasonic signal decoding result according to an embodiment of this application;
FIG. 12 is a diagram of determining duration of a waveform in an ultrasonic signal based on reverberation time according to an embodiment of this application;
FIG. 13 is a diagram of comparison between ultrasonic signals according to an embodiment of this application;
FIG. 14 is a diagram of a connection information receiving result according to an embodiment of this application;
FIG. 15 is a schematic flowchart of determining, by scanning a band, a target band in which a notebook computer can correctly decode an ultrasonic signal according to an embodiment of this application;
FIG. 16 is a diagram of an audio waveform actually captured in a band search process according to an embodiment of this application;
FIG. 17 is a diagram of a result of transferring an IP address based on a target band obtained through band search according to an embodiment of this application;
FIG. 18 is a diagram of a structure of an ultrasonic wave-based device connection apparatus according to an embodiment of this application; and
FIG. 19 is a diagram of a structure of an ultrasonic wave-based device connection apparatus according to an embodiment of this application.

### DESCRIPTION OF EMBODIMENTS

The following describes embodiments of this application with reference to accompanying drawings. It is clear that the described embodiments are merely some but not all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, terms "first", "second", and the like are intended to distinguish between similar objects but do not necessarily indicate a specific order or sequence. It should be understood that the data used in such a way are interchangeable in appropriate circumstances so that the embodiments described herein can be implemented in other orders than the order illustrated or described herein.

In addition, the terms "include", "have", and any variants thereof are intended to cover non-exclusive inclusion. For example, a process, method, system, product, or device including a series of steps or modules is not necessarily limited to those clearly listed steps or modules, but may include other steps or modules that are not clearly listed or are inherent to the process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

For ease of understanding, the following describes technical terms in embodiments of this application.

### (1) Ultrasonic wave

The ultrasonic wave is a mechanical wave with a very short wavelength, and a wavelength of the ultrasonic wave in the air is usually shorter than 2 centimeters. The ultrasonic wave is propagated depending on a medium, and cannot exist in a vacuum. The ultrasonic wave has a longer propagation distance in the water than in the air. However, because the wavelength of the ultrasonic wave is short, the ultrasonic wave is likely to be lost and scattered in the air, and is propagated shorter than an audible sound and an infrasonic wave. However, the short wavelength makes it easier for the ultrasonic wave to obtain anisotropic sound energy, which can be used for cleaning, stone crushing, sterilization and disinfection, and the like.

The word "ultra" of the ultrasonic wave is generated because a lower limit of a band of the ultrasonic wave is beyond human hearing. That is, the ultrasonic wave is usually a sound wave whose frequency is higher than an average hearing upper limit of people. In most cases, a band of an ultrasonic wave used by people is above 20 kilohertz (kHz). In daily life, the ultrasonic wave has a large quantity of application scenarios, such as distance measurement, object detection, and data transmission. Specifically, an ultrasonic sensor may detect, by measuring a change of an echo of a sound wave, whether an object exists. In data transmission, the ultrasonic wave can be used as a carrier to transmit information wirelessly at a short distance, and therefore can be applied to a wireless payment system, a mobile message, and a location-based service. In general, the ultrasonic wave is a multi-functional technology, is widely used in modern communication systems, and has become an important tool of modern communication technologies.

### (2) Frequency response

The frequency response is usually also referred to as a frequency response for short, and is used to describe a difference between processing capabilities of a device for signals at different frequencies in electronics.

### (3) Reverberation

The reverberation is an acoustic characteristic, and means a phenomenon in which a plurality of sound waves are mixed for a period of time. Specifically, when the sound wave is transmitted indoors, the sound wave is reflected by obstacles such as a wall, a ceiling, and a floor. The sound wave is partially absorbed by the obstacles each time the sound wave is reflected. In this case, after a sound source stops making a sound, the sound wave is reflected and absorbed a plurality of times in doors before disappearing finally. Therefore, after the sound source stops making a sound, a phenomenon in which several sound waves are mixed for a period of time (that is, a sound continuation phenomenon that still exists after the indoor sound source stops making a sound) is referred to as the reverberation, and the time period in which a plurality of sound waves are mixed is referred to as reverberation time.

### (4) Screen projection

Screen projection means that content displayed on a display of an electronic device A is transmitted to an electronic device B in a data transmission manner, and the content displayed on the display of the electronic device A is synchronously displayed on a display of the electronic device B. For example, content displayed on a mobile device like a mobile phone, a tablet computer, or a notebook computer is transmitted in a wireless or wired manner to a device on which a television, a projector, or a splicing screen with a large display is located, and the content transmitted by the mobile device is displayed on the television, the projector, or the splicing screen.

### (5) Modulation

Modulation is a technology that converts a signal generated by a source into a form suitable for wireless transmission. Modulation is to sample and quantize an analog signal, perform on-off modulation on an optical carrier by using a binary digital signal "1" or "0", and perform pulse coding.

Specifically, a baseband signal is an original electrical signal, usually refers to a basic signal waveform, and refers to a corresponding electrical pulse in digital communication. In wireless telemetry and remote control systems and radio technologies, modulation is to control parameters (an amplitude, a frequency, and a phase) of a high-frequency carrier by using a baseband signal, so that these parameters change with the baseband signal. The baseband signal used to control the parameters of the high-frequency carrier is referred to as a modulation signal. An unmodulated high-frequency electrical oscillation is referred to as a carrier (which may be a sine wave or a non-sine wave, such as a square wave or a pulse sequence).

### (6) Frequency shift keying (Frequency shift keying, FSK)

FSK is a modulation mode that uses a digital signal to control a carrier frequency change. Main advantages of FSK include easy implementation and good anti-noise and anti-attenuation performance. Therefore, FSK is widely used in medium-speed and low-speed data transmission.

### (7) Linear frequency modulation spread spectrum (Long Range, LoRa)

LoRa is an internet of things modulation technology for linear frequency modulation spread spectrum, and is also referred to as a broadband phenomenon frequency modulation (Chirp Modulation) technology. Compared with the conventional FSK technology, LoRa has a longer transmission distance under the same power consumption, and has a stronger anti-interference capability.

### (8) Speech spectrogram

The speech spectrogram is a speech spectrum diagram, and is usually a spectrogram obtained by processing a received time domain signal. Therefore, only a time domain signal with a sufficient time length is required. Briefly, the speech spectrogram is a spectrum analysis view. A horizontal coordinate of the speech spectrogram is time, a vertical coordinate of the speech spectrogram is frequency, and a coordinate point value is speech data energy. Because three-dimensional information is expressed by using a two-dimensional plane, an energy value is represented by a color. A deeper color indicates stronger speech energy of a point.

Through research, the applicant finds that different types of microphone devices are usually deployed on different terminal devices, and frequency responses of the different types of microphone devices usually have a large difference. Consequently, different terminal devices have different frequency responses. In addition, even if microphone devices of a same type are deployed on the terminal devices, because manners of installing the microphone devices on the terminal devices are different, or reverberation situations in conference rooms in which the terminal devices are located are different, frequency responses of the terminal devices may also differ greatly.

However, currently, in a related technology, a conference tablet in a conference room usually continuously sends an ultrasonic wave in a fixed band, to transmit information such as a conference number to a terminal device that is to join a conference. In this case, because different terminal devices have different frequency responses, a case in which a terminal device having a relatively poor frequency response cannot correctly decode an ultrasonic wave in the fixed band is likely to occur. Therefore, the terminal device cannot obtain the conference number and connect to the conference tablet, and finally, the terminal device is affected in normally joining the conference.

In view of this, embodiments of this application provide an ultrasonic wave-based device connection method. A first electronic device sends a plurality of ultrasonic signals that respectively carry detection information and that are in different bands, and obtains decoded information that is obtained by decoding each ultrasonic signal and that is fed back by a second electronic device. Detection information corresponding to each ultrasonic signal is compared with the decoded information, to determine a target band in which the second electronic device can correctly decode an ultrasonic wave, and then connection information is sent to the second electronic device by using an ultrasonic wave in the target band, so that the second electronic device establishes a connection to the first electronic device based on the connection information. This ensures that the second electronic device can normally join a conference or implement screen projection subsequently.

For ease of understanding, the following first describes a scenario to which the ultrasonic wave-based device connection method provided in embodiments of this application is applied.

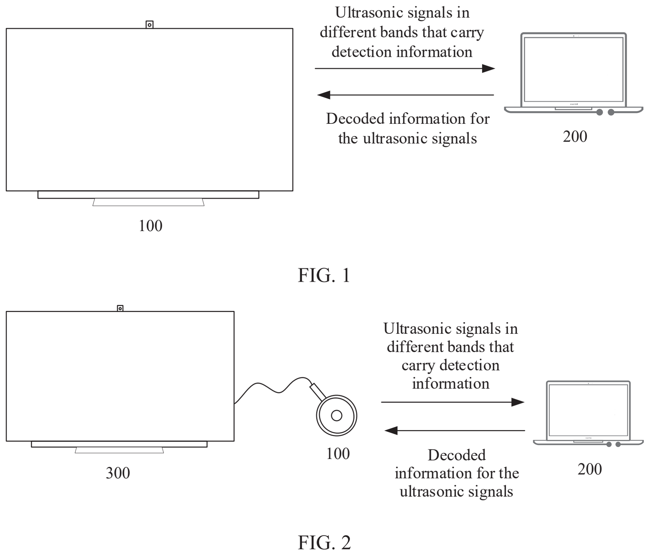

Refer to FIG. 1. FIG. 1 is a diagram of an architecture of an application scenario according to an embodiment of this application.

As shown in FIG. 1, a connection (for example, a Wi-Fi connection) needs to be established between an electronic device 100 and an electronic device 200, so that the electronic device 200 joins a conference held by the electronic device 100 or sends projection content to the electronic device 100. Before the electronic device 100 establishes the connection to the electronic device 200, the electronic device 100 usually needs to provide connection information (for example, a projection code, a conference number, or an IP address of the electronic device 100) for the electronic device 200, so that the electronic device 200 establishes the connection to the electronic device 100 based on the connection information.

To ensure transmission security of the connection information and prevent another device outside a conference room from obtaining the connection information, the electronic device 100 uses an ultrasonic signal to carry the connection information. The electronic device 200 may obtain the connection information by decoding the ultrasonic signal.

In addition, to ensure that the electronic device 200 can correctly obtain, through decoding, the connection information sent by the electronic device 100, the electronic device 100 may first send, to the electronic device 200, a plurality of ultrasonic signals in different bands that carry detection information. After receiving the plurality of ultrasonic signals in the different bands, the electronic device 200 decodes each ultrasonic signal to obtain decoded information corresponding to each ultrasonic signal, and feeds back the decoded information corresponding to each ultrasonic signal to the electronic device 100. In this way, the electronic device 100 may determine, by comparing detection information corresponding to an ultrasonic signal in each band with the decoded information fed back by the electronic device 200, a band in which the electronic device 200 can correctly decode an ultrasonic signal. Finally, the electronic device 100 sends, in the band in which the electronic device 200 can correctly decode an ultrasonic signal, the ultrasonic signal that carries the connection information, so that the electronic device 200 establishes the connection to the electronic device 100 based on the connection information.

In the application scenario shown in FIG. 1, the electronic device 100 may be, for example, a conference device such as a conference tablet, a smart television, or a splicing screen, and the electronic device 200 may be, for example, a terminal device such as a smartphone, a notebook computer, a tablet computer, or a personal computer. In some embodiments, the electronic device 100 may alternatively be a terminal device such as a smartphone, a notebook computer, a tablet computer, or a personal computer, and the electronic device 200 may be a device such as a conference tablet, a smart television, a splicing screen, a smartphone, a notebook computer, a tablet computer, or a personal computer.

In general, the electronic device 100 may be a device responsible for holding a conference and waiting for joining of another device, and the electronic device 200 is a device that needs to establish a connection to the electronic device 100 to implement conference joining or screen projection.

Refer to FIG. 2. FIG. 2 is a diagram of an architecture of an application scenario according to an embodiment of this application. As shown in FIG. 2, an electronic device 100 is connected to an electronic device 300 in a wired manner (for example, a universal serial bus (Universal Serial Bus, USB)). In addition, a connection (for example, a Wi-Fi connection) needs to be established between the electronic device 100 and an electronic device 200, so that the electronic device 200 joins, through the electronic device 100, a conference held by the electronic device 300, or sends projection content to the electronic device 300 through the electronic device 100. That is, the electronic device 100 is responsible for forwarding data between the electronic device 200 and the electronic device 300 by establishing the connection to the electronic device 200.

In the application scenario shown in FIG. 2, a manner of establishing the connection between the electronic device 100 and the electronic device 200 is similar to the process described in FIG. 1, and details are not described herein again.

In the application scenario shown in FIG. 2, the electronic device 100 may be, for example, a device such as a wireless screen transmitter, the electronic device 200 may be, for example, a terminal device such as a smartphone, a notebook computer, a tablet computer, or a personal computer, and the electronic device 300 may be, for example, a conference device such as a conference tablet, a smart television, or a splicing screen.

With reference to the application scenarios shown in FIG. 1 and FIG. 2, the method provided in embodiments of this application may be applied to two devices that need to establish a connection. One device is an ultrasonic transmitter, and the other device is an ultrasonic receiver. The ultrasonic transmitter is configured to send an ultrasonic signal to the ultrasonic receiver, and receive decoded information fed back by the ultrasonic receiver for the ultrasonic signal, so as to determine a band in which the ultrasonic receiver can correctly decode an ultrasonic signal. The ultrasonic receiver is configured to receive the ultrasonic signal sent by the ultrasonic transmitter, and feed back decoded information of the ultrasonic receiver for each ultrasonic signal to the ultrasonic transmitter, so that the ultrasonic transmitter determines the band for correct decoding.

The foregoing describes the scenarios to which the ultrasonic wave-based device connection method provided in embodiments of this application is applied. The following describes an electronic device to which the ultrasonic wave-based device connection method provided in embodiments of this application is applied.

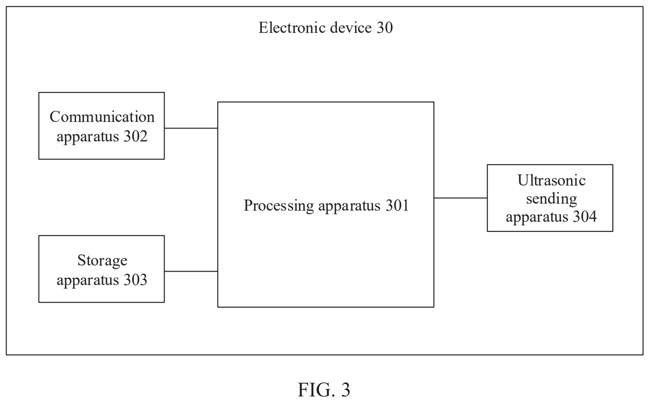

Refer to FIG. 3. FIG. 3 is a diagram of a structure of an electronic device 30 according to an embodiment of this application. The electronic device 30 shown in FIG. 3 may be the foregoing electronic device 100, that is, the electronic device 30 is a device that sends an ultrasonic signal to carry connection information. As shown in FIG. 3, the electronic device 30 includes a processing apparatus 301, a communication apparatus 302, a storage apparatus 303, and an ultrasonic sending apparatus 304.

The communication apparatus 302 may include one or more of a Wi-Fi module, a Bluetooth module, a ZigBee module, an infrared module, a general packet radio service (General Packet Radio service) module, a high definition multimedia interface (High Definition Multimedia Interface, HDMI) module, a communication module of another wireless communication network/wired communication network, or the like. The communication apparatus 302 is configured to implement data exchange between the electronic device 30 and another device, for example, receive decoded information sent by the another device.

In embodiments of this application, the communication apparatus 302 may alternatively include a communication apparatus that supports implementation of a wireless projection function, for example, a projection connection unit. This is not limited in this application. In addition, based on an actual requirement, the communication apparatus 302 may further include an interface like a USB port or a serial/parallel port, configured to implement data exchange between components inside the electronic device. The interface may be determined based on a product type of the electronic device. A structure included in the communication apparatus 302 and a communication manner of the communication apparatus are not limited in this application, and may be determined as appropriate.

The storage apparatus 303 may be configured to store a program for implementing an ultrasonic wave-based device connection method described in the following method embodiments. The processing apparatus 301 is configured to load and execute the program stored in the storage apparatus 303, to implement steps of the ultrasonic wave-based device connection method.

In some embodiments, the storage apparatus 303 may include a high-speed random access memory, or may include a nonvolatile memory, for example, at least one magnetic disk storage device or another volatile solid-state storage device. In this application, respective composition structures and functions of the storage apparatus 303 and the processing apparatus 301 are not described in detail, and may be determined as appropriate.

The ultrasonic sending apparatus 304 is configured to send, to another device, an ultrasonic signal that carries detection information or connection information, to determine a band in which the another device can correctly decode an ultrasonic signal or transfer the connection information to the another device.

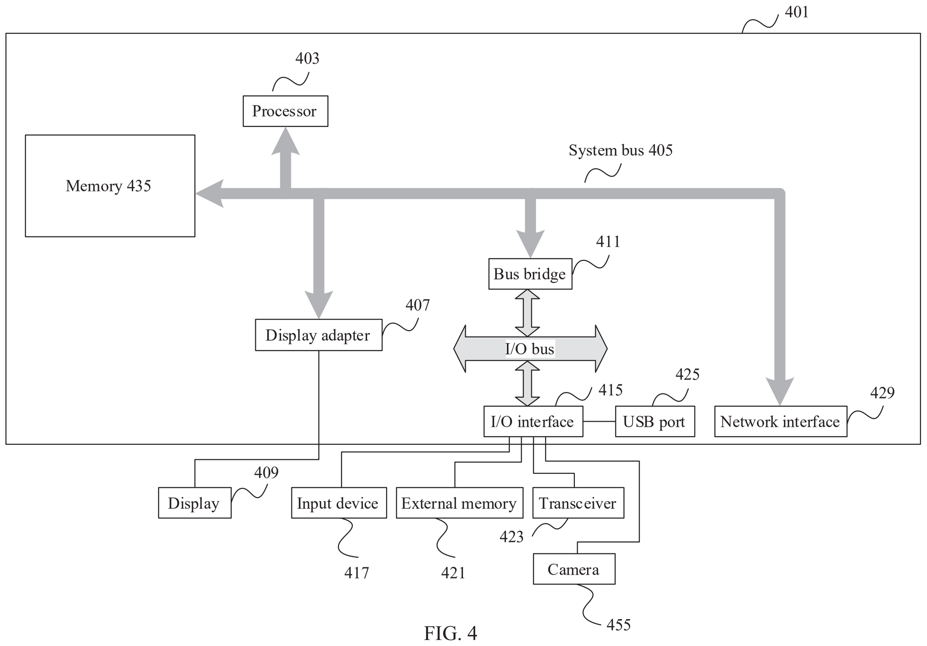

Refer to FIG. 4. FIG. 4 is a diagram of a structure of an electronic device 401 according to an embodiment of this application. The electronic device 401 shown in FIG. 4 may be the electronic device 100 or the electronic device 200 shown in FIG. 1, or the electronic device 200 or the electronic device 300 shown in FIG. 2.

As shown in FIG. 4, the electronic device 401 includes a processor 403, and the processor 403 is coupled to a system bus 405. The processor 403 may be one or more processors, and each processor may include one or more processor cores. A display adapter (video adapter) 407 may drive a display 409, and the display 409 is coupled to the system bus 405. The system bus 405 is coupled to an input/output (I/O) bus through a bus bridge 411. An I/O interface 415 is coupled to the I/O bus. The I/O interface 415 communicates with a plurality of I/O devices, for example, an input device 417 (for example, a touchscreen), an external memory 421 (for example, a hard disk, a floppy disk, an optical disc, a USB flash drive, or a multimedia interface), a transceiver 423 (which may send and/or receive a radio communication signal), a camera 455 (which may capture static and dynamic digital video images), and an external USB port 425. Optionally, an interface connected to the I/O interface 415 may be a USB port.

The processor 403 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The electronic device 401 may communicate with another electronic device through the network interface 429, to implement data transmission in a screen projection process.

The processor 403 may communicate with the memory 435 through the system bus 405, and extract instructions and data in an application from the memory 435, to execute a program.

It should be understood that structures of the electronic devices shown in FIG. 3 and FIG. 4 do not constitute a limitation on the electronic device in embodiments of this application. During actual application, the electronic device may include more or fewer components than those shown in FIG. 3 and FIG. 4, or combine some components, for example, at least one output device like a speaker, a vibration mechanism, or a light, and at least one input device like a keyboard, a mouse, or a pickup device. Details are not listed one by one in embodiments of this application.

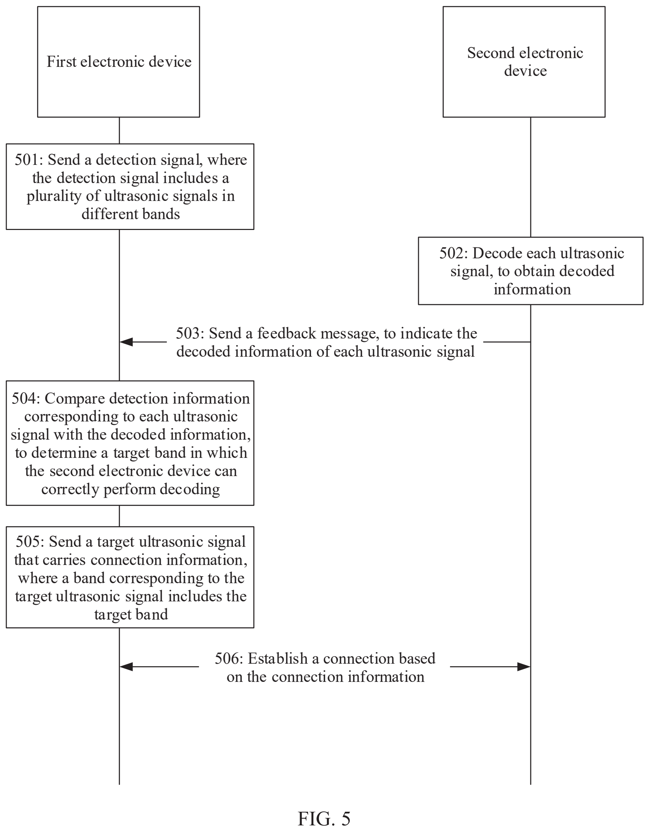

Refer to FIG. 5. FIG. 5 is a schematic flowchart of an ultrasonic wave-based device connection method according to an embodiment of this application. As shown in FIG. 5, a procedure of the ultrasonic wave-based device connection method includes the following steps 501 to 506.

Step 501: A first electronic device sends a detection signal, where the detection signal includes a plurality of ultrasonic signals in different bands, and each of the plurality of ultrasonic signals carries corresponding detection information.

In this embodiment, in a case in which the first electronic device needs to establish a connection to the second electronic device, so that the second electronic device joins a conference of the first electronic device or implements screen projection, the first electronic device serving as an ultrasonic signal transmitter may first send the detection signal, to detect a band in which the second electronic device can correctly decode an ultrasonic signal.

The detection signal includes the plurality of ultrasonic signals, each of the plurality of ultrasonic signals is in a different band, and each ultrasonic signal further carries the corresponding detection information. In addition, detection information carried in different ultrasonic signals may be the same or may be different. This is not specifically limited herein.

Specifically, a manner of using the ultrasonic signal to carry the detection information may be: first determining detection information corresponding to each band, and then modulating the detection information onto an ultrasonic signal in the corresponding band by using a modulation technology (for example, FSK or LoRa), so that the corresponding detection information is carried in the ultrasonic signal in each band.

In addition, there may be a plurality of implementations in which the detection signal includes the plurality of ultrasonic signals in the different bands.

In a possible implementation, the detection signal includes a plurality of ultrasonic signals that are sequentially arranged in terms of time. That is, the detection signal may be divided into a plurality of consecutive signals in terms of time, and each of the plurality of signals is an ultrasonic signal in each band.

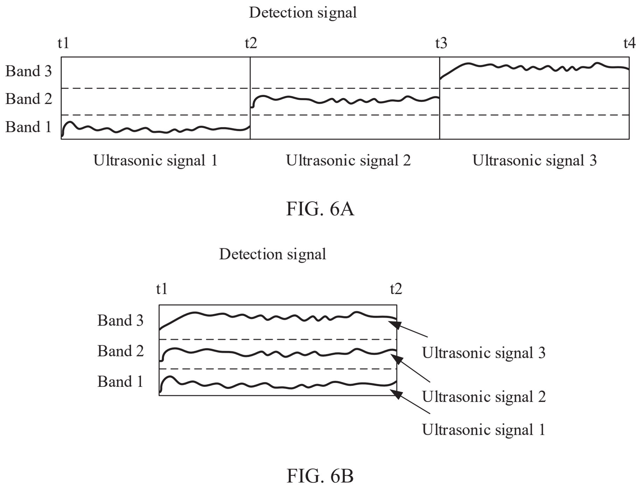

For example, refer to FIG. 6A. FIG. 6A is a diagram of a detection signal according to an embodiment of this application. As shown in FIG. 6A, the detection signal includes an ultrasonic signal 1 with duration t1 to t2, an ultrasonic signal 2 with duration t2 to t3, and an ultrasonic signal 3 with duration t3 to t4. In addition, the ultrasonic signal 1 is in a band 1, the ultrasonic signal 2 is in a band 2, and the ultrasonic signal 3 is in a band 3, that is, the ultrasonic signal 1 to the ultrasonic signal 3 are ultrasonic signals in different bands.

In another possible implementation, the detection signal is obtained by superimposing the plurality of ultrasonic signals in the different bands. That is, the detection signal carries the plurality of ultrasonic signals in the different bands in a same time period.

For example, refer to FIG. 6B. FIG. 6B is a diagram of another detection signal according to an embodiment of this application. As shown in FIG. 6B, the detection signal includes an ultrasonic signal 1, an ultrasonic signal 2, and an ultrasonic signal 3 that each have duration t1 to t2, that is, the detection signal is obtained by superimposing the ultrasonic signal 1, the ultrasonic signal 2, and the ultrasonic signal 3 in a same time period. In addition, because the ultrasonic signal 1 is in a band 1, the ultrasonic signal 2 is in a band 2, and the ultrasonic signal 3 is in a band 3, that is, the ultrasonic signal 1 to the ultrasonic signal 3 are ultrasonic signals in different bands, the three ultrasonic signals do not interfere with each other, and decoding of an ultrasonic signal in each band by an ultrasonic receiver is not affected.

It should be noted that a band corresponding to each ultrasonic signal in the detection signal sent by the first electronic device may be determined based on an ultrasonic receiving capability of a device serving as the ultrasonic receiver. For example, in a case in which currently most electronic devices can receive an ultrasonic wave at a frequency below 24 kHz, and it is difficult for a human ear to normally hear an ultrasonic wave at a frequency above 16 kHz, a band range corresponding to the detection signal sent by the first electronic device may be 16 kHz to 24 kHz. For example, the detection signal sent by the first electronic device may include four ultrasonic signals, where a band corresponding to a first ultrasonic signal is 16 kHz to 18 kHz, a band corresponding to a second ultrasonic signal is 18 kHz to 20 kHz, a band corresponding to a third ultrasonic signal is 20 kHz to 22 kHz, and a band corresponding to a fourth ultrasonic signal is 22 kHz to 24 kHz.

Optionally, to ensure that no mutual crosstalk occurs between a plurality of ultrasonic signals in different bands, bands corresponding to different ultrasonic signals in the plurality of ultrasonic signals sent by the first electronic device do not overlap. That is, the bands corresponding to the different ultrasonic signals are independent of each other and have no overlapping range.

Step 502: After receiving the detection signal, the second electronic device decodes each ultrasonic signal, to obtain decoded information.

In this embodiment, the second electronic device serves as an ultrasonic signal receiver, and may receive the detection signal from the first electronic device through a sound wave receiving apparatus (for example, a microphone). Because the detection signal includes the plurality of ultrasonic signals in the different bands, the second electronic device may independently decode the ultrasonic signal in each band in the detection signal, to obtain decoded information corresponding to the ultrasonic signal in each band.

Optionally, if the detection signal includes a plurality of ultrasonic signals that are sequentially arranged in terms of time, after receiving the detection signal, the second electronic device may separately decode ultrasonic signals in different time periods, to obtain detection information carried in ultrasonic signals in different bands.

Optionally, if the detection signal is obtained by superimposing the plurality of ultrasonic signals in the different bands, after receiving the detection signal, when separately decoding the ultrasonic signal in each band, the second electronic device may filter a signal that is in the detection signal and that is in another band, and then decode a filtered ultrasonic signal in a specific band, to obtain corresponding detection information in each band.

Step 503: The second electronic device sends a feedback message to the first electronic device, where the feedback message indicates the decoded information obtained by the second electronic device by decoding each ultrasonic signal.

After obtaining the decoded information of the ultrasonic signal in each band through decoding, the second electronic device sends feedback information to the first electronic device, so that the first electronic device determines whether the decoded information obtained by the second electronic device through decoding is correct.

The feedback information may sequentially indicate decoded information corresponding to all bands in a preset band order, for example, in an order from a low band to a high band or in an order from a high band to a low band. For example, the feedback information may be specifically "12, 34, 56", that is, the feedback information indicates that the decoded information in the bands obtained through decoding in an order from a low band to a high band is "12", "34", and "56" respectively. It should be noted that the preset band order may be a default band order used by the first electronic device and the second electronic device, or may be a band order determined by the first electronic device and the second electronic device through negotiation. In conclusion, when the first electronic device receives the feedback information, the first electronic device can learn of the corresponding preset band order in the feedback information, so that the first electronic device can determine a band corresponding to each piece of decoded information indicated in the feedback information.

Alternatively, the feedback information may indicate both a value of a band and decoded information corresponding to the band. For example, the feedback information may be specifically "(16 kHz to 18 kHz, 12), (18 kHz to 20 kHz, 34), (20 kHz to 22 kHz, 56)". That is, the feedback information indicates that decoded information in the band of 16 kHz to 18 kHz is "12", decoded information in the band of 18 kHz to 20 kHz is "34", and decoded information in the band of 20 kHz to 22 kHz is "56".

Optionally, to ensure that the first electronic device can successfully receive the feedback message, the second electronic device may send the feedback message to the first electronic device in another communication manner other than an ultrasonic wave. For example, the second electronic device may send the feedback message to the first electronic device in a communication manner such as Bluetooth, ZigBee, or infrared. This is not specifically limited in this embodiment.

Step 504: The first electronic device compares detection information corresponding to each ultrasonic signal with the decoded information, to determine a target band in which the second electronic device can correctly perform decoding.

Because the second electronic device feeds back, to the first electronic device in the feedback message, the decoded information obtained by decoding the ultrasonic signal in each band, the first electronic device may compare the detection information corresponding to the ultrasonic signal in each band with the decoded information, to determine the target band in which the second electronic device can correctly decode an ultrasonic signal. That is, detection information corresponding to the target band is the same as decoded information that is corresponding to the target band and that is sent by the second electronic device.

The target band may include one or more bands, and the one or more bands included in the target band all belong to the bands corresponding to the plurality of ultrasonic signals sent by the first electronic device in step 501.

For example, it is assumed that detection information 1 carried in an ultrasonic signal in a band 1 by the first electronic device is "12", detection information 2 carried in an ultrasonic signal in a band 2 is "34", detection information 3 carried in an ultrasonic signal in a band 3 is "56", and decoded information that is obtained by decoding the ultrasonic signals in the band 1 to the band 3 and that is fed back by the second electronic device is "12", "34", and "23" respectively. Therefore, the first electronic device may determine that the second electronic device can correctly decode an ultrasonic signal in the band 1 and the band 2, but cannot correctly decode an ultrasonic signal in the band 3.

Step 505: The first electronic device sends a target ultrasonic signal, where a band corresponding to the target ultrasonic signal includes the target band, the target ultrasonic signal carries connection information, and the connection information is used to establish a connection between the second electronic device and the first electronic device.

After determining that the second electronic device can correctly decode an ultrasonic signal in the target band, the first electronic device modulates the connection information onto the ultrasonic signal in the target band, to obtain the target ultrasonic signal that carries the connection information, and sends the target ultrasonic signal.

Optionally, when the first electronic device determines, by comparing the detection information with the decoded information, that the second electronic device can correctly decode a plurality of bands, the first electronic device may carry the connection information based on that the second electronic device can correctly decode the plurality of bands.

For example, the target band corresponding to the target ultrasonic signal may include a plurality of subbands, and each subband in the target band is a band in which the second electronic device can correctly decode an ultrasonic signal. The target ultrasonic signal is obtained by superimposing a plurality of ultrasonic signals in different subbands, and an ultrasonic signal in each subband carries a part of content of the connection information.

For example, it is assumed that the plurality of subbands included in the target band are respectively 16 kHz to 18 kHz, 18 kHz to 20 kHz, and 20 kHz to 22 kHz, and the connection information is 123456789. In this case, in the target ultrasonic signal, information content carried in an ultrasonic signal in the subband of 16 kHz to 18 kHz may be "123", information content carried in an ultrasonic signal in the subband of 18 kHz to 20 kHz may be "456", and information content carried in an ultrasonic signal in the subband of 20 kHz to 22 kHz may be "789".

In this solution, the ultrasonic signals in the plurality of subbands are superimposed to obtain the target ultrasonic signal, and the ultrasonic signal in each subband carries a part of content of the connection information, so that a transmission rate of the connection information can be multiplied, and transmission time of the connection information can be effectively shortened.

In this embodiment, the connection information sent by the first electronic device may be information for the second electronic device to establish a connection to the first electronic device. For example, the connection information may include one or more of a projection code, a pairing key, a conference number, or an IP address of the first electronic device. Specific content of the connection information is not specifically limited in this embodiment.

Step 506: The second electronic device establishes a connection to the first electronic device based on the connection information.

After receiving the target ultrasonic signal sent by the first electronic device, the second electronic device decodes the target ultrasonic signal to obtain the connection information, and establishes the connection to the first electronic device based on the connection information.

Optionally, when the second electronic device establishes the connection to the first electronic device, the connection established between the second electronic device and the first electronic device may be used to implement screen projection or conference joining. For example, after establishing the connection to the first electronic device, the second electronic device sends projection content to the first electronic device, so that the first electronic device can display the projection content sent by the second electronic device; or after establishing the connection to the first electronic device, the second electronic device may join a conference held or joined by the first electronic device, so that the second electronic device can share content in the conference.

The connection established between the second electronic device and the first electronic device may be, for example, a Wi-Fi connection or a 5th generation mobile communication technology (5th Generation Mobile Communication Technology, 5G) connection. This is not specifically limited in this embodiment. For example, when the connection information is a pairing key, the second electronic device may send the pairing key to the first electronic device by using a 5G wireless signal; and after the first electronic device determines that the pairing key is correct, the first electronic device establishes a 5G connection to the second electronic device, so that the first electronic device and the second electronic device can exchange data based on 5G wireless signals.

The foregoing describes a process in which the first electronic device determines, by sending the detection signal, the target band in which the second electronic device can correctly decode an ultrasonic signal, and then sends the connection information based on the target band. The following describes a process of triggering the first electronic device to send the detection signal.

It may be understood that, because the detection signal sent by the first electronic device is an ultrasonic signal that is close to or slightly higher than an upper limit of hearing of a human ear, to avoid interference to the human ear caused by continuously sending the detection signal by the first electronic device, the first electronic device may be triggered, in a specific manner, to send the detection signal. There may be a plurality of implementations of triggering the first electronic device to send the detection signal, which are specifically described below.

In a possible implementation, a user delivers an instruction to the first electronic device, to trigger the first electronic device to send the detection signal.

Specifically, when the user needs to use the first electronic device to hold a conference or receive projection content sent by another device, the user usually expects that the first electronic device first establishes a connection to the another electronic device, to implement conference joining or screen projection. Therefore, in this case, the user may deliver an instruction to the first electronic device in a manner such as using a remote control or tapping a related button on a display of the first electronic device, to enable the first electronic device to actively send the detection signal, so that the first electronic device establishes the connection to the another electronic device.

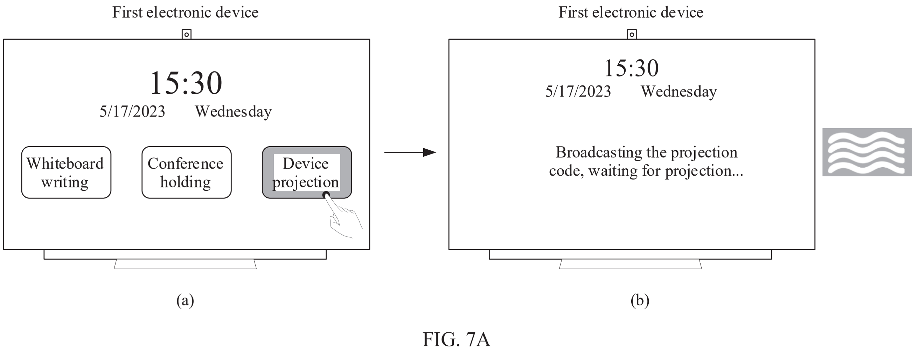

For example, refer to FIG. 7A. FIG. 7A is a diagram of delivering an instruction to a first electronic device to trigger the first electronic device to send a detection signal according to an embodiment of this application. As shown in (a) in FIG. 7A, when the first electronic device is a conference tablet, the first electronic device displays buttons such as "Whiteboard writing", "Conference holding", and "Device projection" on the display when the first electronic device is in standby mode, and the user may tap a related button on the display of the first electronic device to trigger the first electronic device to perform a corresponding operation. After the user taps the "Device projection" button, the first electronic device starts to actively send the detection signal, to establish a connection to another device, and then receives projection content sent by the another device. In addition, as shown in (b) in FIG. 7A, in a process in which the first electronic device establishes the connection to the another device, text content such as "Broadcasting the projection code, waiting for projection..." is displayed on a screen of the first electronic device, until the another device establishes the connection to the first electronic device by using the foregoing steps 501 to 506.

In another possible implementation, the user delivers an instruction to the second electronic device, to trigger the second electronic device to send a broadcast message, so that the first electronic device triggers sending of the detection signal based on the broadcast message.

For example, before step 501, the second electronic device may obtain a first instruction, where the first instruction indicates the second electronic device to establish a connection to the first electronic device. The first instruction may be delivered to the second electronic device by the user by clicking/tapping a related button on the second electronic device by using a mouse or a finger. For example, the user delivers the first instruction by clicking/tapping a "Join the conference on the conference tablet" button displayed on the second electronic device.

The second electronic device sends the broadcast message in response to the first instruction, where the broadcast message indicates the first electronic device to send an ultrasonic signal. The broadcast message sent by the second electronic device may be, for example, sent in a communication manner such as Bluetooth, ZigBee, or infrared. This is not specifically limited herein.

In this way, after the first electronic device receives the broadcast message, the first electronic device triggers sending of the detection signal.

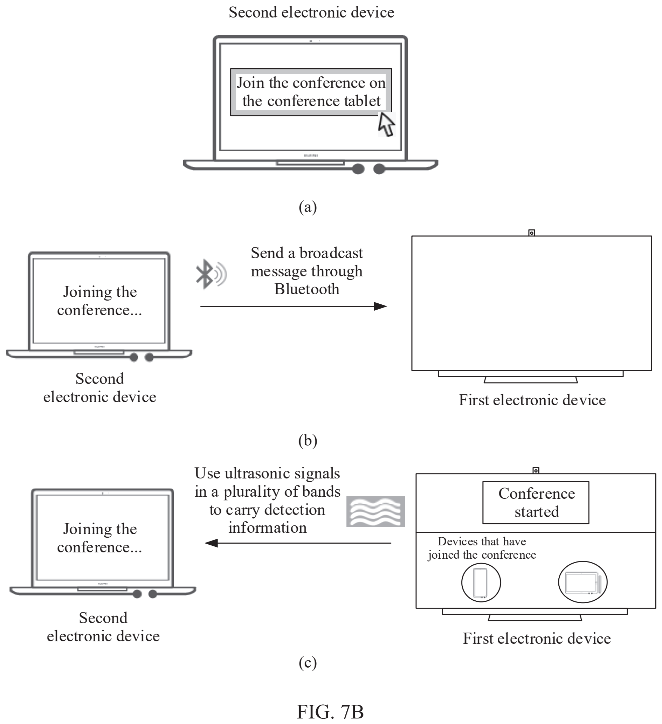

For example, refer to FIG. 7B. FIG. 7B is a diagram in which a second electronic device sends a broadcast message to trigger a first electronic device to send a detection signal according to an embodiment of this application. As shown in (a) in FIG. 7B, the user clicks/taps the "Join the conference on the conference tablet" button in a display interface of the second electronic device, to trigger the second electronic device to send the broadcast message that indicates the first electronic device to send the detection signal. As shown in (b) in FIG. 7B, in a period in which the second electronic device sends the broadcast message through Bluetooth, text content "Joining the conference..." is displayed in a display interface of the second electronic device, to prompt the user that the second electronic device is joining the conference. As shown in (c) in FIG. 7B, after the first electronic device receives the broadcast message, the first electronic device sends the detection signal, that is, uses ultrasonic signals in a plurality of bands to carry the detection information, to determine a band in which the second electronic device can correctly decode an ultrasonic signal.

In this solution, the second electronic device sends the broadcast message to trigger the first electronic device to send the detection signal, so that the first electronic device can be prevented from continuously sending the detection signal. This effectively avoids interference to a human ear caused by sending an ultrasonic signal for a long time by the first electronic device, and reduces energy consumption of the first electronic device.

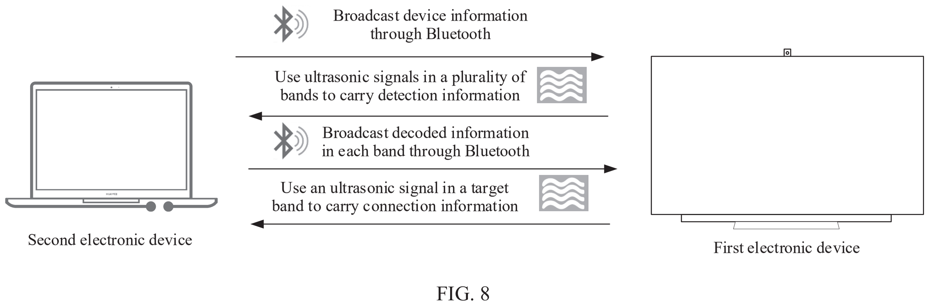

That is, an interaction process between the second electronic device and the first electronic device before the connection is established includes four steps in total. Refer to FIG. 8. FIG. 8 is a diagram of an interaction process between a second electronic device and a first electronic device according to an embodiment of this application. As shown in FIG. 8, in a first step, the second electronic device sends a broadcast message through Bluetooth, and uses the broadcast message to carry device information of the second electronic device; in a second step, after receiving the broadcast message, the first electronic device sends ultrasonic signals in a plurality of bands, and uses the ultrasonic signals in the plurality of bands to carry detection information; in a third step, the second electronic device may send, to the first electronic device through Bluetooth, decoded information of the second electronic device for an ultrasonic signal in each band; and in a fourth step, after determining a target band in which the second electronic device can correctly decode an ultrasonic signal, the first electronic device uses an ultrasonic signal in the target band to carry connection information, so that the second electronic device can establish a connection to the first electronic device based on the connection information.

Optionally, the broadcast message sent by the second electronic device may include the device information of the second electronic device. The device information of the second electronic device may include a device model or a unique device identifier of the second electronic device. After the first electronic device determines the target band in which the second electronic device can correctly decode an ultrasonic signal, the first electronic device may store a mapping relationship between the device information of the second electronic device and the target band.

In this way, when the second electronic device accesses the first electronic device next time, the second electronic device sends a broadcast message that carries the device information of the second electronic device to the first electronic device, and the first electronic device can determine, based on the stored mapping relationship, the target band in which the second electronic device can correctly decode an ultrasonic signal, so as to directly send connection information by using an ultrasonic signal in the target band, thereby omitting a process of sending a detection signal to determine a band.

In general, in this solution, the second electronic device sends the device information in the broadcast message, and the first electronic device records the mapping relationship between the device information of the second electronic device and the target band in which the second electronic device can correctly decode an ultrasonic signal, so that the first electronic device can quickly send an ultrasonic signal in the target band when the second electronic device accesses the first electronic device again, and the band in which the second electronic device can correctly decode an ultrasonic signal does not need to be detected, thereby improving efficiency of establishing a connection between the first electronic device and the second electronic device.

Optionally, when the first electronic device records the mapping relationship between the device information of the second electronic device and the target band, the first electronic device further sends the mapping relationship to a server. In this way, the server may synchronize the mapping relationship to another electronic device, so that when the second electronic device establishes a connection to the another electronic device, the another electronic device can also quickly determine the band in which the second electronic device can correctly decode an ultrasonic signal.

For example, after receiving the mapping relationship, the server may send the mapping relationship to a third electronic device. In this way, when the second electronic device sends a broadcast message to the third electronic device, to access the third electronic device, the third electronic device may determine, based on the mapping relationship sent by the server, the target band corresponding to the second electronic device, and then use an ultrasonic signal in the target band to carry connection information, so that the second electronic device can quickly access the third electronic device.

In general, the mapping relationship between the device information of the second electronic device and the target band is sent by the first electronic device to the server, so that the band in which the second electronic device can correctly decode an ultrasonic signal can be synchronized between a plurality of devices, thereby improving efficiency of establishing a connection between the second electronic device and each electronic device.

It should be noted that, in different conference room environments, due to different sizes of conference rooms and different objects placed in the conference rooms, reverberation situations of the conference rooms may be greatly different. For example, reverberation time of some conference rooms is relatively short, and reverberation time of some conference rooms is relatively long. In addition, reverberation time of an environment in which an electronic device is located affects decoding of an ultrasonic signal by the electronic device to some extent, so that the electronic device can correctly decode an ultrasonic signal in a specific band in most environments, but may not correctly decode an ultrasonic signal in a specific band in some environments (for example, an environment in which reverberation time is relatively long).

Based on this, in some possible embodiments, when sending the mapping relationship to the server, the first electronic device may further send reverberation time of an environment in which the first electronic device is located. That is, the server can obtain both the reverberation time and the mapping relationship, so as to obtain reverberation time of an environment in which the mapping relationship between the device information of the second electronic device and the target band is established. In this way, when delivering the mapping relationship to another electronic device (for example, the foregoing third electronic device), the server may also send the reverberation time at the same time. Only when reverberation time of an environment in which the another electronic device is located is the same as or close to the reverberation time delivered by the server, the another electronic device considers that the mapping relationship delivered by the server is valid.

In addition, in some conference room environments in which reverberation time is relatively long (for example, the reverberation time is more than 800 milliseconds), a spectrogram of an ultrasonic signal has a significant tailing, and consequently, a device is severely interfered with in recognizing information carried in the ultrasonic signal. That is, a waveform at a former moment in the ultrasonic signal is aliased with a waveform at a latter moment due to reverberation effect (generating a frequency domain tailing), thereby interfering with demodulation.

Based on this, in some embodiments, this embodiment proposes that the first electronic device determines duration of each waveform in the ultrasonic signal based on reverberation time.

For example, because a principle of carrying information by the ultrasonic signal is actually that different waveforms are used to represent corresponding characters, before the first electronic device sends the detection signal, the first electronic device may obtain reverberation time of an environment in which the first electronic device is located, and determine, based on the reverberation time, duration of a waveform that is in the detection signal and that represents each character in the detection information. That is, the duration of the waveform that is in the detection signal and that represents each character in the detection information is related to the reverberation time of the environment in which the first electronic device is located.

Specifically, longer reverberation time of the environment in which the first electronic device is located indicates longer duration of a waveform that is in the target ultrasonic signal and that represents each character; and shorter reverberation time of the environment in which the first electronic device is located indicates shorter duration of a waveform that is in the target ultrasonic signal and that represents each character.

In addition, in a process in which the first electronic device sends a target ultrasonic wave, duration of a waveform that is in the target ultrasonic wave and that represents each character in the connection information may also be determined based on the reverberation time of the environment in which the first electronic device is located.

In general, in this solution, the duration of the waveform that is in the ultrasonic signal and that represents each character is determined based on the reverberation time of the environment in which the first electronic device is located, so that the duration of the wavelength can be prolonged accordingly in the environment with the reverberation time, thereby reducing reverberation interference in the environment, and ensuring that the second electronic device can normally decode the ultrasonic signal.

In the foregoing step 501, the plurality of bands corresponding to the plurality of ultrasonic signals in the detection signal sent by the first electronic device are fixed. In some cases, the second electronic device cannot correctly decode the ultrasonic signals that are in the plurality of bands and that are corresponding to the detection signal sent by the first electronic device. Therefore, this embodiment provides a method of adaptively scanning a band that the second electronic device can be adapted to, and then sending connection information based on the band that the second electronic device can be adapted to.

Specifically, when all detection information in the detection signal is different from the decoded information sent by the second electronic device, it indicates that the second electronic device cannot correctly decode the ultrasonic signals in the plurality of bands corresponding to the detection signal, and therefore the first electronic device sequentially sends ultrasonic signals that carry detection information and whose bands gradually change, and receives decoded information sent by the second electronic device for the ultrasonic signals whose bands gradually change, until the decoded information sent by the second electronic device is the same as detection information in a corresponding ultrasonic signal.

That is, starting from a band, the first electronic device gradually adjusts (for example, decreases or increases) a band of a sent ultrasonic signal, and after an ultrasonic signal is sent each time, receives decoded information fed back by the second electronic device, to determine whether the second electronic device can correctly decode the current band. The first electronic device continuously adjusts the band of the ultrasonic signal, and obtains the decoded information fed back by the second electronic device, to determine the band in which the second electronic device can correctly decode an ultrasonic signal.

For example, it is assumed that bands of a plurality of ultrasonic signals included in a detection signal initially sent by the first electronic device are respectively 16 kHz to 18 kHz, 18 kHz to 20 kHz, 20 kHz to 22 kHz, and 22 kHz to 24 kHz, and decoded information fed back by the second electronic device for the foregoing plurality of bands is different from detection information. In this case, the first electronic device may increase a band of an ultrasonic signal by 1 kHz each time starting from the band of 16 kHz to 18 kHz. For example, the first electronic device sends an ultrasonic signal in the band of 16 kHz to 18 kHz at the first time, sends an ultrasonic signal in the band of 17 kHz to 19 kHz at the second time, and sends an ultrasonic signal in the band of 18 kHz to 20 kHz at the third time, until a band in which the second electronic device can correctly decode an ultrasonic signal can be determined.

In this solution, the band of the ultrasonic signal sent by the first electronic device is gradually adjusted, so that a band in which the second electronic device can correctly decode an ultrasonic signal can be comprehensively searched for, to ensure that the second electronic device can correctly obtain the connection information through decoding.

The foregoing describes the ultrasonic wave-based device connection method provided in embodiments of this application. The following describes in detail an execution process of the ultrasonic wave-based device connection method with reference to specific examples. Specifically, in this embodiment, an example in which a conference tablet is used as the foregoing first electronic device and a notebook computer is used as the foregoing second electronic device is used to describe a specific process in which the conference tablet and the notebook computer establish a Wi-Fi connection, so that the notebook computer joins a conference on the conference tablet.

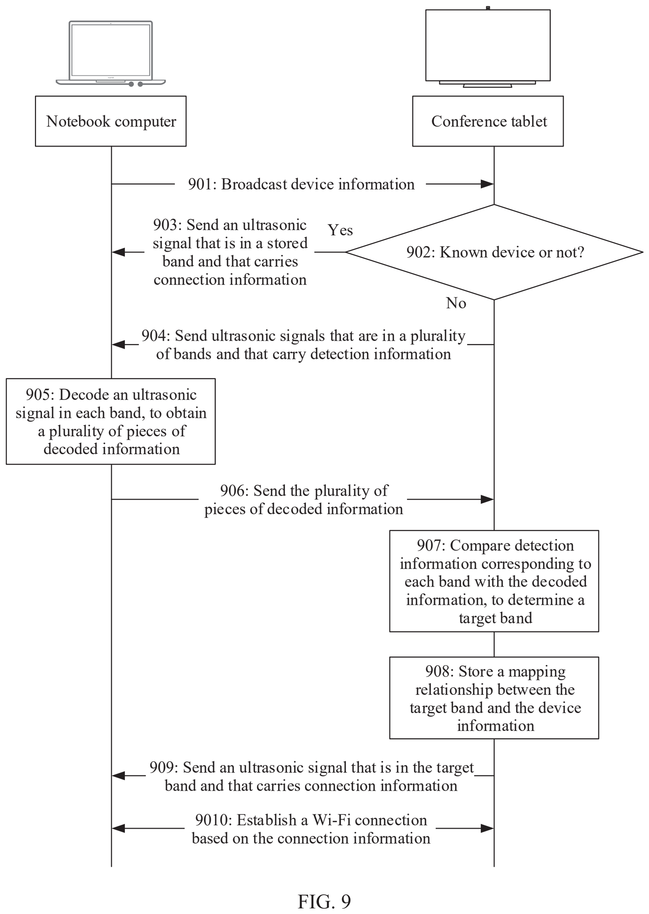

Refer to FIG. 9. FIG. 9 is a schematic flowchart of interaction between a notebook computer and a conference tablet according to an embodiment of this application. As shown in FIG. 9, a process in which the notebook computer interacts with the conference tablet to obtain connection information includes the following steps 901 to 9010.

Step 901: The notebook computer sends a broadcast message to the conference tablet, to broadcast device information of the notebook computer.

In this embodiment, the notebook computer sends the broadcast message to the conference tablet to trigger the conference tablet to send the connection information to the notebook computer by using an ultrasonic signal. The notebook computer may send the broadcast message to the conference tablet through Bluetooth. In addition, the broadcast message carries the device information of the notebook computer, for example, a device model (for example, Huawei MateBook 14) of the notebook computer or a unique device identifier of the notebook computer.

Step 902: After receiving the broadcast message, the conference tablet determines whether the notebook computer is a known device.

Briefly, if the conference tablet establishes a connection to the notebook computer in advance by using an ultrasonic signal, a mapping relationship between the device information of the notebook computer and a band in which the notebook computer can correctly decode an ultrasonic signal is stored in the conference tablet. Therefore, the conference tablet may determine, by checking whether the stored mapping relationship includes the device information of the notebook computer, whether the notebook computer is a known device (that is, a device for which a band in which an ultrasonic signal can be correctly decoded has been determined). If the mapping relationship stored in the conference tablet includes the device information of the notebook computer, it is determined that the notebook computer is a known device; or if the mapping relationship stored in the conference tablet does not include the device information of the notebook computer, it is determined that the notebook computer is an unknown device.

Step 903: If the notebook computer is a known device, the conference tablet sends, to the notebook computer, an ultrasonic signal that carries the connection information and that is in the stored band.

If the notebook computer is a known device, the conference tablet stores the mapping relationship including the device information of the notebook computer. Therefore, the conference tablet can obtain the band (that is, the stored band) in the mapping relationship, and modulate the connection information onto the ultrasonic signal in the band in the mapping relationship, so as to send, to the notebook computer, the ultrasonic signal that carries the connection information and that is in the stored band.

Step 904: If the notebook computer is not a known device, the conference tablet sends ultrasonic signals that carry detection information and that are in a plurality of bands to the notebook computer.

The ultrasonic signals that carry the detection information and that are in the plurality of bands may be, for example, the detection signal in the foregoing step 501. The plurality of bands may be, for example, 18 kHz to 20 kHz, 20 kHz to 22 kHz, and 22 kHz to 24 kHz.

Step 905: After receiving the ultrasonic signals in the plurality of bands, the notebook computer decodes an ultrasonic signal in each band, to obtain a plurality of pieces of decoded information.

Each of the plurality of pieces of decoded information is corresponding to one band.

Step 906: The notebook computer sends the plurality of pieces of decoded information to the conference tablet.

Specifically, the notebook computer may send the plurality of pieces of decoded information to the conference tablet in a Bluetooth broadcast manner.

Step 907: The conference tablet compares corresponding detection information in each band with the decoded information, to determine a target band in which the notebook computer can correctly decode an ultrasonic signal.

Step 908: The conference tablet stores a mapping relationship between the target band and the device information of the notebook computer.

Further, the conference tablet may further upload the mapping relationship between the target band and the device information of the notebook computer to a server.

Step 909: The conference tablet sends an ultrasonic signal that is in the target band and that carries connection information to the notebook computer.

The connection information may be, for example, a projection code, a conference number, or an IP address of the conference tablet. For example, in a case in which the connection information is a conference number with nine digits, and target bands are three bands: 18 kHz to 20 kHz, 20 kHz to 22 kHz, and 22 kHz to 24 kHz, the conference tablet may include three digits in each of ultrasonic signals in the three bands, and obtain, by superimposing the ultrasonic signals in the three bands, an ultrasonic signal carrying the connection information.

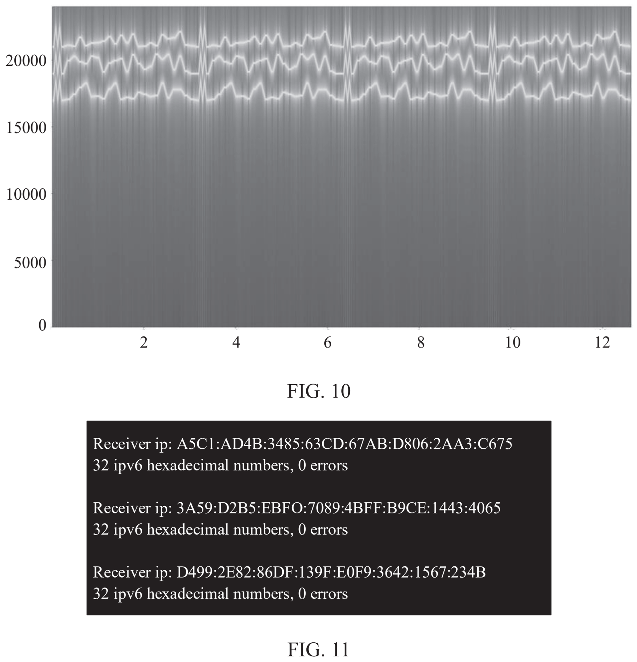

For example, refer to FIG. 10. FIG. 10 is a diagram of a waveform of an ultrasonic signal that carries connection information according to an embodiment of this application. As shown in FIG. 10, the ultrasonic signal carrying the connection information includes three ultrasonic signals that are respectively in bands 18 kHz to 20 kHz, 20 kHz to 22 kHz, and 22 kHz to 24 kHz, and the ultrasonic signals in the three different bands each carry a part of content of the connection information.

Step 9010: The notebook computer establishes a Wi-Fi connection to the conference tablet based on the connection information.

After obtaining the connection information, the notebook computer may establish the Wi-Fi connection to the conference tablet based on the connection information. For establishing, by the notebook computer, the Wi-Fi connection to the conference tablet based on the connection information, refer to an existing related technology, and details are not described herein in this embodiment.

In this embodiment, it is verified by a practical test that, in a practical test scenario in a conference room of 6x8 meters, if a speaker of the conference tablet is aligned with the ground, and an ultrasonic wave is played after the volume is adjusted to the maximum, a human ear cannot hear any noise brought by the ultrasonic wave. In addition, as shown in FIG. 11, FIG. 11 is a diagram of an ultrasonic signal decoding result according to an embodiment of this application. When a 32-bit internet protocol version 6 (Internet Protocol Version 6, IPv6) address is transmitted by using three bands, all decoding accuracy of the notebook computer is 100%.

Optionally, because a reverberation situation in the conference room affects normal decoding of an ultrasonic signal by the notebook computer, before sending the ultrasonic signal to the notebook computer, the conference tablet may first determine, based on reverberation time of an environment in which the conference tablet is located, whether duration of a waveform in the ultrasonic signal needs to be adjusted, so as to avoid impact caused by environment reverberation.

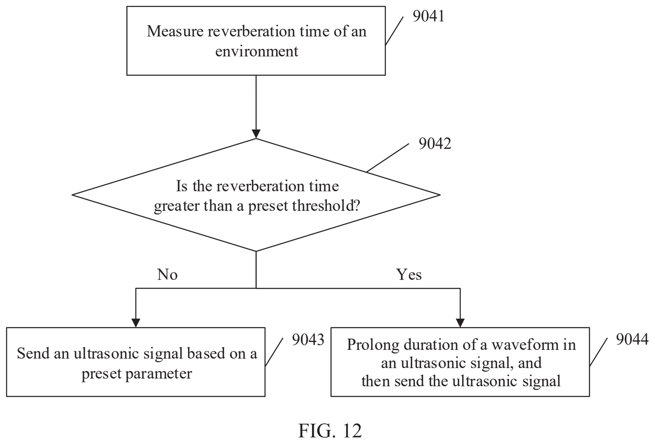

Refer to FIG. 12. FIG. 12 is a diagram of determining duration of a waveform in an ultrasonic signal based on reverberation time according to an embodiment of this application. As shown in FIG. 12, step 904 further includes the following steps 9041 to 9044.

Step 9041: The conference tablet measures reverberation time of an environment in which the conference tablet is located.

Specifically, the conference tablet may implement reverberation time measurement based on some existing algorithms. The reverberation time measurement is that a signal generator drives, by using an amplifier, a speaker to emit a sound and records the sound. When an indoor sound field reaches a steady state, the sound is cut off and a sound attenuation process is recorded, so that an attenuation curve and a measurement result of the reverberation time can be obtained.

Step 9042: The conference tablet determines whether the reverberation time of the environment in which the conference tablet is located is greater than a preset threshold.

The preset threshold may be, for example, 800 milliseconds or another threshold. This is not specifically limited herein.

Step 9043: If the reverberation time of the environment in which the conference tablet is located is not greater than the preset threshold, send an ultrasonic signal based on a preset parameter.

The preset parameter may be a parameter that is set in advance, and is used to specify duration of a waveform that is in the ultrasonic signal and that represents each character. For example, the duration of the waveform that is in the ultrasonic signal and that represents each character is 2048/48000 seconds.

Step 9044: If the reverberation time of the environment in which the conference tablet is located is greater than the preset threshold, prolong duration of a waveform in an ultrasonic signal, and then send the ultrasonic signal.

For example, duration of a waveform that is in the ultrasonic signal and that represents each character may be prolonged to 1.5 times or 2 times of a preset parameter. In this way, in an environment with relatively long reverberation time, duration of a waveform of each character in an ultrasonic signal is prolonged, so that impact caused by reverberation tailing effect can be reduced, and it is ensured that the notebook computer can correctly decode the ultrasonic signal.

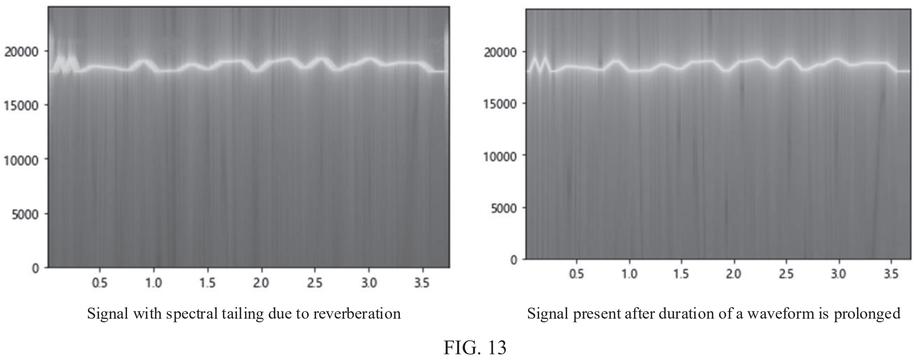

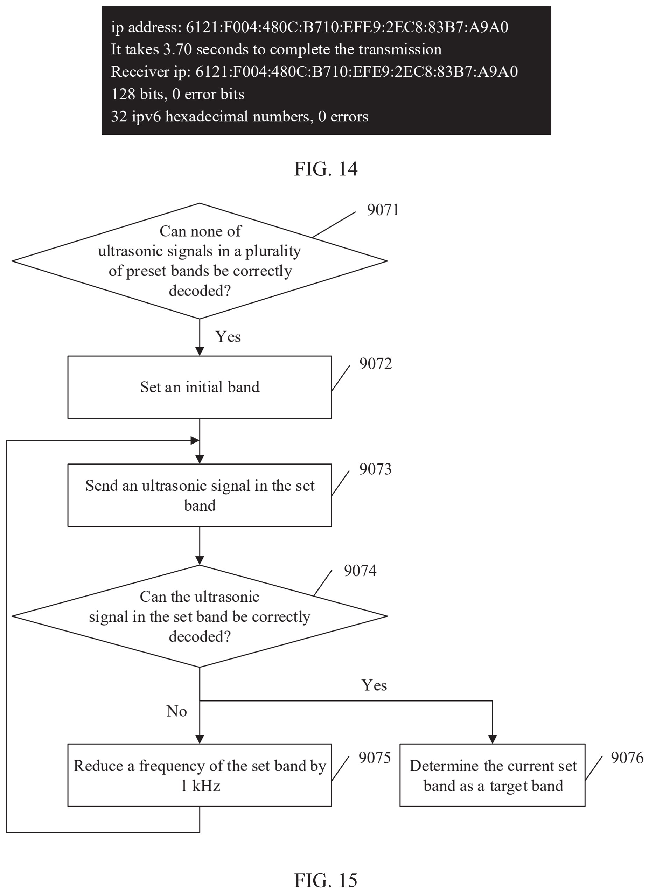

For example, refer to FIG. 13 and FIG. 14. FIG. 13 is a diagram of comparison between ultrasonic signals according to an embodiment of this application. FIG. 14 is a diagram of a connection information receiving result according to an embodiment of this application. As shown in FIG. 13, before the duration of the waveform that is in the ultrasonic signal and that represents each character is prolonged, the ultrasonic signal captured by the notebook computer is a signal with spectral tailing due to reverberation. As a result, the notebook computer cannot recognize the connection information carried in the ultrasonic signal. After the duration of the waveform that is in the ultrasonic signal and that represents each character is prolonged, the ultrasonic signal captured by the notebook computer no longer has spectral tailing. Therefore, the notebook computer can correctly decode the ultrasonic signal, so as to obtain the connection information carried in the ultrasonic signal.

As shown in FIG. 14, when the connection information carried by using the ultrasonic signal is an IPv6 address, after the duration of the waveform that is in the ultrasonic signal and that represents each character is prolonged, it takes 3.7 seconds to complete transmission of the IPv6 address, and the notebook computer can correctly receive the 128-bit IPv6 address.

In addition, in the embodiment shown in FIG. 9, the conference tablet sends, to the notebook computer, ultrasonic signals that are in a plurality of fixed bands and that carry detection information. In some extreme environments, the notebook computer may not be capable of correctly decoding the ultrasonic signals in the plurality of fixed bands. Therefore, in this embodiment, a band in which the notebook computer can correctly decode an ultrasonic signal may be further searched for in fine granularity by scanning bands one by one.

Refer to FIG. 15. FIG. 15 is a schematic flowchart of determining, by scanning a band, a target band in which a notebook computer can correctly decode an ultrasonic signal according to an embodiment of this application. As shown in FIG. 15, step 907 further includes the following steps 9071 to 9076.

Step 9071: The conference tablet determines whether the notebook computer cannot correctly decode each of ultrasonic signals in a plurality of preset bands.

Specifically, the conference tablet may determine, by comparing the decoded information returned by the notebook computer with detection information actually carried in an ultrasonic signal in each band, whether the notebook computer can correctly decode the ultrasonic signal in each band.

Step 9072: When the notebook computer cannot correctly decode the ultrasonic signals in the plurality of preset bands, the conference tablet sets an initial band in a band search process.

The initial band set by the conference tablet may be used as a first searched band in the band search process, for example, 22 kHz to 24 kHz.

Step 9073: The conference tablet sends an ultrasonic signal in the set band to the notebook computer, and uses the ultrasonic signal to carry detection information.

In a process of performing band search for the first time, the set band is the initial band preset in step 9072.

Step 9074: The conference tablet determines, based on the decoded information fed back by the notebook computer, whether the notebook computer can correctly decode the ultrasonic signal in the set band.

After receiving the ultrasonic signal in the set band sent by the conference tablet, the notebook computer decodes the ultrasonic signal to obtain decoded information, and feeds back the decoded information to the conference tablet. In this way, the conference tablet may determine, by comparing the decoded information fed back by the notebook computer with the detection information actually carried in the ultrasonic signal, whether the notebook computer can correctly decode the ultrasonic signal in the set band.

Step 9075: When the notebook computer cannot correctly decode the ultrasonic signal in the set band, the conference tablet reduces a frequency of the set band by 1 kHz, and continues to perform step 9073.

For example, when the set band is 22 kHz to 24 kHz, a band of 21 kHz to 23 kHz is obtained after the frequency of the set band is reduced by 1 kHz.

Step 9076: When the notebook computer can correctly decode the ultrasonic signal in the set band, the conference tablet determines the current set band as a target band.

If the notebook computer can correctly decode the ultrasonic signal in the set band, the conference tablet may determine the current set band as the target band, and subsequently send connection information to the notebook computer based on an ultrasonic signal in the target band.

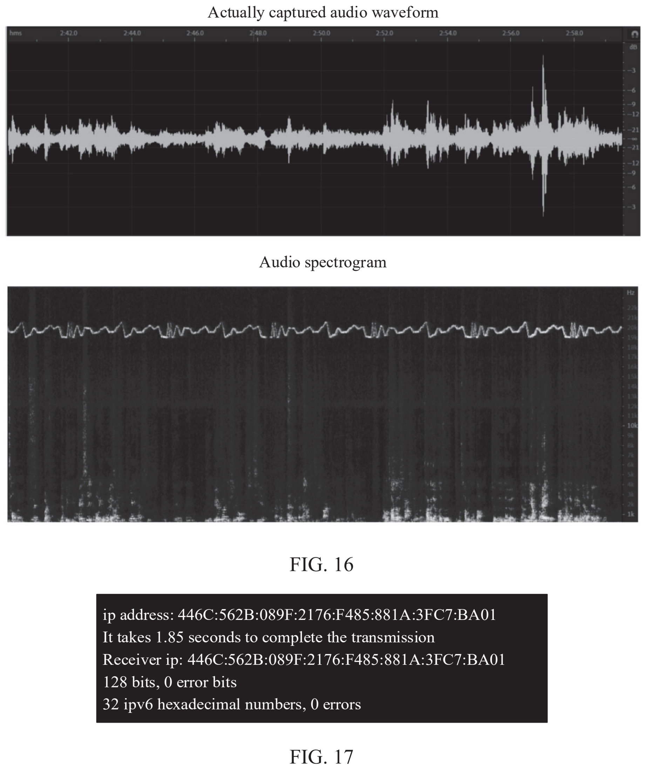

For example, refer to FIG. 16. FIG. 16 is a diagram of an audio waveform actually captured in a band search process according to an embodiment of this application. As shown in FIG. 16, in the band search process, the conference tablet sends an ultrasonic signal to the notebook computer by using a speaker, and the notebook computer receives an audio signal, that is, the ultrasonic signal sent by the conference tablet, by using a microphone. A waveform shown in the upper figure in FIG. 16 is a waveform of the audio signal received by the notebook computer by using the microphone. A lower figure in FIG. 16 is an audio spectrogram corresponding to the audio signal received by the notebook computer, and indicates distribution of audio in frequency domain. In the audio spectrogram, there is a spectral line between 18 kHz and 20 kHz after encoding, which is encoded audio information (that is, detection information).

Refer to FIG. 17. FIG. 17 is a diagram of a result of transferring an IP address based on a target band obtained through band search according to an embodiment of this application. As shown in FIG. 17, when the target band is 18 kHz to 20 kHz shown in FIG. 16, it takes 1.85 seconds to complete transmission of the IPv6 address, and the notebook computer can correctly receive the 128-bit IPv6 address.

The foregoing mainly describes the solutions provided in embodiments of this application from a perspective of the method. It may be understood that to implement the foregoing functions, the electronic device includes corresponding hardware structures and/or software modules for performing the functions. A person skilled in the art should be easily aware that, with reference to the example modules and algorithm steps described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner.

The following describes in detail an apparatus and a device that are configured to perform the foregoing method in embodiments of this application.

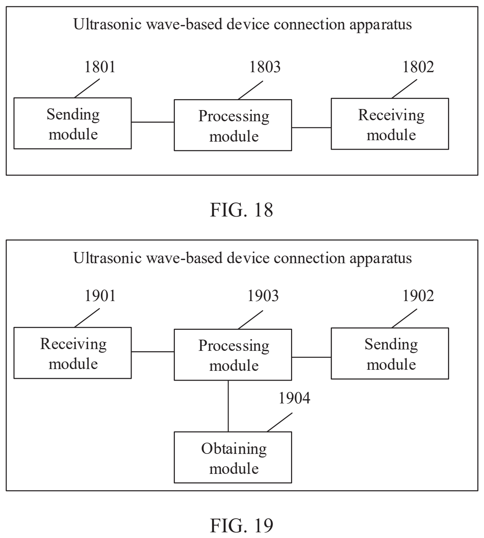

Refer to FIG. 18. FIG. 18 is a diagram of a structure of an ultrasonic wave-based device connection apparatus according to an embodiment of this application. As shown in FIG. 18, the ultrasonic wave-based device connection apparatus may be deployed on a first electronic device, and the ultrasonic wave-based device connection apparatus includes: a sending module 1801, configured to send a detection signal, where the detection signal includes a plurality of ultrasonic signals, the plurality of ultrasonic signals are in a one-to-one correspondence with a plurality of different bands, and each of the plurality of ultrasonic signals carries corresponding detection information; a receiving module 1802, configured to receive a feedback message sent by a second electronic device, where the feedback message indicates decoded information obtained by the second electronic device by decoding each ultrasonic signal; and a processing module 1803, configured to determine a target band from the plurality of different bands, where detection information corresponding to the target band is the same as decoded information corresponding to the target band. The sending module 1801 is further configured to send a target ultrasonic signal, where a band corresponding to the target ultrasonic signal includes the target band, the detection information corresponding to the target band is the same as the decoded information corresponding to the target band, the target ultrasonic signal carries connection information, and the connection information is used to establish a connection between the second electronic device and the first electronic device.

In a possible implementation, the detection signal is obtained by superimposing the plurality of ultrasonic signals in the different bands.

In a possible implementation, the target band includes a plurality of subbands, the target ultrasonic signal is obtained by superimposing a plurality of ultrasonic signals in different subbands, and an ultrasonic signal in each subband carries a part of content of the connection information.

In a possible implementation, before the sending module 1801 sends the detection signal, the receiving module 1802 is further configured to receive a broadcast message, where the broadcast message indicates the first electronic device to send an ultrasonic signal.

In a possible implementation, the broadcast message includes device information of the second electronic device; and the ultrasonic wave-based device connection apparatus further includes the processing module 1803, configured to store a mapping relationship between the device information of the second electronic device and the target band.

In a possible implementation, the sending module 1801 is further configured to send the mapping relationship to a server.

In a possible implementation, the processing module 1803 is configured to obtain reverberation time of an environment in which the apparatus is located, and determine, based on the reverberation time, duration of a waveform that is in the detection signal and that represents each character in the detection information.

In a possible implementation, when all detection information in the detection signal is different from the decoded information sent by the second electronic device, the sending module 1801 is further configured to sequentially send ultrasonic signals that carry detection information and whose bands gradually change, and the receiving module 1802 is further configured to receive decoded information sent by the second electronic device for the ultrasonic signals whose bands gradually change, until the decoded information sent by the second electronic device is the same as detection information in a corresponding ultrasonic signal.

In a possible implementation, the connection established between the second electronic device and the first electronic device is used to implement screen projection or conference joining.

In a possible implementation, bands corresponding to different ultrasonic signals in the plurality of ultrasonic signals do not overlap.

In a possible implementation, the connection information includes a projection code, a conference number, or an IP address of the first electronic device.

Refer to FIG. 19. FIG. 19 is a diagram of a structure of an ultrasonic wave-based device connection apparatus according to an embodiment of this application. As shown in FIG. 19, the ultrasonic wave-based device connection apparatus may be deployed on a second electronic device, and the ultrasonic wave-based device connection apparatus includes: a receiving module 1901, configured to receive a detection signal sent by a first electronic device, where the detection signal includes a plurality of ultrasonic signals, the plurality of ultrasonic signals are in a one-to-one correspondence with a plurality of different bands, and each of the plurality of ultrasonic signals carries corresponding detection information; and a sending module 1902, configured to send a feedback message to the first electronic device, where the feedback message indicates decoded information obtained by the second electronic device by decoding each ultrasonic signal. The receiving module 1901 is further configured to receive a target ultrasonic signal sent by the first electronic device, where a band corresponding to the target ultrasonic signal includes a target band, the target band is determined from the plurality of different bands, detection information corresponding to the target band is the same as decoded information corresponding to the target band, and the target ultrasonic signal carries connection information. The sending module 1902 is further configured to enable, based on the connection information, the second electronic device to establish a connection to the first electronic device.

In a possible implementation, the detection signal is obtained by superimposing the plurality of ultrasonic signals in the different bands.

In a possible implementation, the target band includes a plurality of subbands, the target ultrasonic signal is obtained by superimposing a plurality of ultrasonic signals in different subbands, and an ultrasonic signal in each subband carries a part of content of the connection information. The ultrasonic wave-based device connection apparatus further includes a processing module 1903, configured to combine decoded information obtained by decoding the ultrasonic signal in each subband, to obtain the connection information.

In a possible implementation, the ultrasonic wave-based device connection apparatus further includes an obtaining module 1904; before the receiving module 1901 receives the detection signal sent by the first electronic device, the obtaining module 1904 is further configured to obtain a first instruction, where the first instruction indicates the second electronic device to establish a connection to the first electronic device; and the sending module 1902 is further configured to send a broadcast message in response to the first instruction, where the broadcast message indicates the first electronic device to send an ultrasonic signal.

In a possible implementation, the broadcast message includes device information of the second electronic device.

In a possible implementation, duration of a waveform that is in the detection signal and that represents each character in the detection information is related to reverberation time of an environment in which the first electronic device is located.

In a possible implementation, when all detection information in the detection signal is different from the decoded information sent by the second electronic device, the receiving module 1901 is further configured to sequentially receive ultrasonic signals sent by the first electronic device that carry detection information and whose bands gradually change, and the sending module 1902 is further configured to sequentially send, to the first electronic device, decoded information for the ultrasonic signals whose bands gradually change, until the decoded information sent by the second electronic device is the same as detection information in a corresponding ultrasonic signal.

In a possible implementation, the connection established between the second electronic device and the first electronic device is used to implement screen projection or conference joining.

In a possible implementation, bands corresponding to different ultrasonic signals in the plurality of ultrasonic signals do not overlap.

In a possible implementation, the connection information includes a projection code, a conference number, or an IP address of the first electronic device.

It should be noted that content such as information exchange and an execution process between modules/components in the foregoing apparatus is based on a same concept as the method embodiments corresponding to FIG. 5 to FIG. 17 in this application. For specific content, refer to the descriptions in the foregoing method embodiments of this application. Details are not described herein again.

It should be noted that, for a specific implementation of the apparatus and brought beneficial effects, refer to the descriptions in the method embodiments corresponding to FIG. 5 to FIG. 17. Details are not described one by one herein again.

An embodiment of this application further provides an electronic device, including a processor and a memory. The memory is configured to store computer instructions, and when the processor executes the instructions, the electronic device is enabled to perform the method according to any one of the foregoing aspects. The electronic device may include the ultrasonic wave-based device connection apparatus in the embodiment corresponding to FIG. 18 or FIG. 19.

An embodiment of this application further provides a conference system, including the ultrasonic wave-based device connection apparatus in the embodiment corresponding to FIG. 18 and the ultrasonic wave-based device connection apparatus in the embodiment corresponding to FIG. 19.

An embodiment of this application further provides a computer-readable storage medium, including instructions. When the instructions are run on a computer, the computer is enabled to control an electronic device to perform any implementation described in the foregoing method embodiments.

An embodiment of this application further provides a computer program product. The computer program product includes computer program code. When the computer program code is run on a computer, the computer is enabled to perform any implementation described in the foregoing method embodiments.

An embodiment of this application further provides a chip system, including a memory and a processor. The memory is configured to store a computer program, and the processor is configured to invoke the computer program from the memory and run the computer program, to enable the chip to perform any implementation described in the foregoing method embodiments.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily indicate a same embodiment. Further, these specific features, structures, or characteristics may be combined in one or more embodiments in any suitable manner. It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, with reference to the examples described in embodiments disclosed in this specification, units and algorithm steps can be implemented by using electronic hardware, computer software, or a combination thereof. To clearly describe interchangeability between hardware and software, the foregoing description generally describes composition and steps of each example based on functions. Whether the functions are implemented by hardware or software depends on specific applications and design constraints of the technical solutions. A person skilled in the art may use different methods to implement the described functions for each particular application, but it should not be considered that the implementation goes beyond the scope of this application.

## Claims

1. An ultrasonic wave-based device connection method, comprising:
sending, by a first electronic device, a detection signal, wherein the detection signal comprises a plurality of ultrasonic signals, the plurality of ultrasonic signals are in a one-to-one correspondence with a plurality of different bands, and each of the plurality of ultrasonic signals carries corresponding detection information;
receiving, by the first electronic device, a feedback message sent by a second electronic device, wherein the feedback message indicates decoded information obtained by the second electronic device by decoding each ultrasonic signal;
determining, by the first electronic device, a target band from the plurality of different bands, wherein detection information corresponding to the target band is the same as decoded information corresponding to the target band; and
sending, by the first electronic device, a target ultrasonic signal, wherein a band corresponding to the target ultrasonic signal comprises the target band, the target ultrasonic signal carries connection information, and the connection information is used to establish a connection between the second electronic device and the first electronic device.

2. The method according to claim 1, wherein the detection signal is obtained by superimposing the plurality of ultrasonic signals in the different bands.

3. The method according to claim 1 or 2, wherein the target band comprises a plurality of subbands, the target ultrasonic signal is obtained by superimposing a plurality of ultrasonic signals in different subbands, and an ultrasonic signal in each subband carries a part of content of the connection information.

4. The method according to any one of claims 1 to 3, wherein before sending, by the first electronic device, the detection signal, the method further comprises:
receiving, by the first electronic device, a broadcast message, wherein the broadcast message indicates the first electronic device to send an ultrasonic signal.

5. The method according to claim 4, wherein the broadcast message comprises device information of the second electronic device; and
the method further comprises:
storing, by the first electronic device, a mapping relationship between the device information of the second electronic device and the target band.

6. The method according to claim 5, wherein the method further comprises:
sending, by the first electronic device, the mapping relationship to a server.

7. The method according to any one of claims 1 to 6, wherein the method further comprises:
obtaining, by the first electronic device, reverberation time of an environment in which the first electronic device is located, and determining, based on the reverberation time, duration of a waveform that is in the detection signal and that represents each character in the detection information.

8. The method according to any one of claims 1 to 7, wherein the method further comprises:
when all detection information in the detection signal is different from the decoded information sent by the second electronic device, sequentially sending, by the first electronic device, ultrasonic signals that carry detection information and whose bands gradually change, and receiving decoded information sent by the second electronic device for the ultrasonic signals whose bands gradually change, until the decoded information sent by the second electronic device is the same as detection information in a corresponding ultrasonic signal.

9. The method according to any one of claims 1 to 8, wherein the connection established between the second electronic device and the first electronic device is used to implement screen projection or conference joining.

10. The method according to any one of claims 1 to 9, wherein bands corresponding to different ultrasonic signals in the plurality of ultrasonic signals do not overlap.

11. The method according to any one of claims 1 to 10, wherein the connection information comprises a projection code, a pairing key, a conference number, or an internet protocol IP address of the first electronic device.

12. An ultrasonic wave-based device connection apparatus, wherein the apparatus is deployed on a first electronic device, and the apparatus comprises:
a sending module, configured to send a detection signal, wherein the detection signal comprises a plurality of ultrasonic signals, the plurality of ultrasonic signals are in a one-to-one correspondence with a plurality of different bands, and each of the plurality of ultrasonic signals carries corresponding detection information;
a receiving module, configured to receive a feedback message sent by a second electronic device, wherein the feedback message indicates decoded information obtained by the second electronic device by decoding each ultrasonic signal; and
a processing module, configured to determine a target band from the plurality of different bands, wherein detection information corresponding to the target band is the same as decoded information corresponding to the target band, wherein
the sending module is further configured to send a target ultrasonic signal, wherein a band corresponding to the target ultrasonic signal comprises the target band, the target ultrasonic signal carries connection information, and the connection information is used to establish a connection between the second electronic device and the first electronic device.

13. The apparatus according to claim 12, wherein the detection signal is obtained by superimposing the plurality of ultrasonic signals in the different bands.

14. The apparatus according to claim 12 or 13, wherein the target band comprises a plurality of subbands, the target ultrasonic signal is obtained by superimposing a plurality of ultrasonic signals in different subbands, and an ultrasonic signal in each subband carries a part of content of the connection information.

15. The apparatus according to any one of claims 12 to 14, wherein before the sending module sends the detection signal, the receiving module is further configured to receive a broadcast message, wherein the broadcast message indicates the first electronic device to send an ultrasonic signal.

16. The apparatus according to claim 15, wherein the broadcast message comprises device information of the second electronic device; and
the apparatus further comprises the processing module, configured to store a mapping relationship between the device information of the second electronic device and the target band.

17. The apparatus according to any one of claims 12 to 16, wherein the apparatus further comprises the processing module, configured to obtain reverberation time of an environment in which the apparatus is located, and determine, based on the reverberation time, duration of a waveform that is in the detection signal and that represents each character in the detection information.

18. An electronic device, comprising a memory and a processor, wherein the memory stores code, the processor is configured to execute the code, and when the code is executed, the electronic device performs the method according to any one of claims 1 to 11.

19. A computer storage medium, wherein the computer storage medium stores instructions, and when the instructions are executed by a computer, the computer is enabled to implement the method according to any one of claims 1 to 11.

20. A computer program product, wherein the computer program product stores instructions, and when the instructions are executed by a computer, the computer is enabled to implement the method according to any one of claims 1 to 11.
